(19) Europäisches Patentamt
European Patent Office
Office européen des brevets

(11) **EP 4 166 352 B1**

(12) **EUROPEAN PATENT SPECIFICATION**

(45) Date of publication and mention of the grant of the patent:
**01.10.2025 Bulletin 2025/40**

(21) Application number: **22189224.3**

(22) Date of filing: **08.08.2022**

(51) International Patent Classification (IPC):
***B60C 1/00*** *(2006.01)* ***C08L 21/00*** *(2006.01)*
***B60C 9/00*** *(2006.01)* *C08L 7/00 (2006.01)*
*C08L 9/00 (2006.01)* *C08K 3/04 (2006.01)*
*C08K 5/098 (2006.01)* *C08L 61/06 (2006.01)*

(52) Cooperative Patent Classification (CPC):
(C-Sets available)
**B60C 3/04; B60C 9/0007; B60C 9/2003; B60C 11/033;** B60C 2001/0066; B60C 2009/0021; B60C 2009/2247; B60C 2011/0353; B60C 2011/0355; Y02T 10/86 (Cont.)

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.10.2021 JP 2021170037**

(43) Date of publication of application:
**19.04.2023 Bulletin 2023/16**

(73) Proprietor: **Sumitomo Rubber Industries, Ltd.**
**Kobe-shi, Hyogo 651-0072 (JP)**

(72) Inventors:
- **MAEKAWA, Natsuki**
  **Hyogo, 651-0072 (JP)**
- **MIAO, Dong**
  **Hyogo, 651-0072 (JP)**
- **ISHIZUKA, Hirotaka**
  **Hyogo, 651-0072 (JP)**
- **MISAKI, Momoka**
  **Hyogo, 651-0072 (JP)**
- **SUZUKI, Masumi**
  **Hyogo, 651-0072 (JP)**
- **MIKI, Takashi**
  **Hyogo, 651-0072 (JP)**

(74) Representative: **Manitz Finsterwald**
**Patent- und Rechtsanwaltspartnerschaft mbB**
**Martin-Greif-Straße 1**
**80336 München (DE)**

(56) References cited:
**EP-A1- 3 868 573** **WO-A1-2021/085385**
**US-A1- 2002 055 583**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08L 61/14, C08L 91/00, C08L 45/00, C08K 3/04, C08K 3/04, C08K 5/098, C08K 5/42, C08K 3/22, C08K 3/06, C08K 5/47;**
**C08L 7/00, C08L 91/00, C08L 45/00, C08K 3/04, C08K 3/04, C08K 5/098, C08K 5/42, C08K 3/22, C08K 3/06, C08K 5/47**

## Description

BACKGROUND OF THE INVENTION

Field of the Invention

The present disclosure relates to a pneumatic tire and more specifically relates to a pneumatic tire including a tread portion and a belt layer.

Background Art

In recent years, due to the growing interest in environmental issues or from the viewpoint of economy, the demand for reducing fuel consumption has been increasing for automobiles, so that there is also a strong demand for improvement in low fuel consumption performance of pneumatic tires that are mounted to automobiles (hereinafter, also referred to simply as "tires").
The low fuel consumption performance of a tire can be evaluated based on rolling resistance, and it is known that the lower the rolling resistance is, the better the low fuel consumption performance of the tire is.
Therefore, it has been conventionally proposed to reduce the rolling resistance by devising the blending formula of a rubber composition for forming the tread portion of the tire (for example, Japanese Laid-Open Patent Publication No. 2018-178034, Japanese Laid-Open Patent Publication No. 2019-089911, International Publication No. WO2018/186367, Japanese Laid-Open Patent Publication No. 2019-206643).
WO 2021/085385 A1 describes a tire 1 having a belt layer disposed in a tread portion, wherein the belt layer has a plurality of belt plies, the plurality of belt plies 7A, 7B includes a single-wire cord having a short diameter SD and a long diameter LD with a ratio SD/LD between the short diameter SD and the long diameter LD being less than 1.00, and a topping rubber 10 covering the single-wire cord, and the single-wire cord is disposed so that a direction of the short diameter SD is oriented to a thickness direction of the plurality of belt plies.
However, with the development of expressways in recent years, it is not uncommon to travel long distances on expressways, and there is a strong demand for improvements in ride comfort and steering stability during high speed running. It cannot be said that each conventional art described above sufficiently satisfies these requirements.
Therefore, an object of the present disclosure is to provide a pneumatic tire having excellent ride comfort and steering stability during high speed running.

SUMMARY OF THE INVENTION

The present discloser has conducted an intensive study to solve the above problem, has found that the problem can be solved by the disclosure described below, and has completed the present disclosure.
The present disclosure is directed to a pneumatic tire including a tread portion and a belt layer, wherein

the belt layer includes reinforcing cords made of a steel monofilament and covered with a rubber composition, and the number e of the reinforcing cords arranged (cords) per 5 cm in a tire width direction, a thickness G (mm) of the tread portion, and a complex elastic modulus E* (MPa) measured for the rubber composition under conditions of temperature: 70°C, initial strain: 5%, dynamic strain: ±1%, frequency: 10 Hz, and deformation mode: stretch, satisfy the following (Expression 1),

$$e \div G \times E^{*} \geq 70 \qquad \text{(Expression 1)}.$$

According to the present disclosure, it is possible to provide a pneumatic tire having excellent ride comfort and steering stability during high speed running.

DETAILED DESCRIPTION

[1] Characteristics of Tire According to Present Disclosure

First, the characteristics of the tire according to the present disclosure will be described.

1. Outline

The tire according to the present disclosure is a pneumatic tire including a tread portion and a belt layer, wherein the belt layer includes reinforcing cords made of a steel monofilament (steel monofilament cords: hereinafter, also referred to simply as "monofilament cords") and covered with a rubber composition.
The number (hereinafter, also referred to as "ends") e of the reinforcing cords arranged per 5 cm in a tire width direction (cords/5 cm), a thickness (hereinafter, also referred to as "tread portion rubber gauge") G (mm) of the tread portion, and a complex elastic modulus E* (MPa) measured for the rubber composition under conditions of temperature: 70°C, initial strain: 5%, dynamic strain: ±1%, frequency: 10 Hz, and deformation mode: stretch, satisfy the following (Expression 1).

$$e \div G \times E^* \geq 70 \qquad \text{(Expression 1)}$$

By having these characteristics, as described later, it is possible to provide a pneumatic tire having excellent ride comfort and steering stability during high speed running.
In the above description, the ends e refer to the average number of the monofilament cords arranged per 5 cm in the tire width direction in a state where the tire is fitted on a normal rim, the internal pressure of the tire is 250 kPa, and no load is applied to the tire, and can be simply obtained by measuring the number of monofilament cords arranged between 5 and 10 cm of a width with a tire equator plane as a center on a cross-sectional section obtained by cutting the tire with a thickness of 2 to 4 cm in a tire radial direction, and calculating the average number of monofilament cords per 5 cm.
Moreover, in the above, the tread portion rubber gauge G is the linear distance from a tread surface to the surface of the monofilament cord at the outermost layer of the belt layer on the tire equator plane in a cross-section in the tire radial direction when the tire is fitted on the normal rim, the internal pressure of the tire is 250 kPa, and no load is applied to the tire. In the case where a groove is formed on the tread equator plane, the linear distance from the point at which a line obtained by connecting tire ground-contact surface end portions of the groove and the tire equator plane intersect each other to the outermost layer of the belt layer is defined as the distance G. In the case where no monofilament cord at the outermost layer of the belt layer exists on the tire equator plane, the point of intersection of the equator plane and a line obtained by connecting two points on the outermost side in the tire radial direction of a pair of monofilament cords closest to the equator plane is regarded as the position of the outermost layer of the belt layer, and the linear distance to the tread surface is defined as the distance G. Simply, the tread portion rubber gauge G can be measured in a state where a bead portion in a section obtained by cutting the tire with a thickness of 2 to 4 mm in the tire width direction is pressed so as to match the corresponding rim width.
Here, the "normal rim" is a rim that is defined, in a standard system including a standard on which the tire is based, by the standard for each tire, and refers to, for example, the standard rim at an applicable size described in "JATMA YEAR BOOK" in the JATMA (Japan Automobile Tyre Association, Inc.) standard, the "Measuring Rim" described in "STANDARDS MANUAL" in the ETRTO (The European Tyre and Rim Technical Organisation) standard, or the "Design Rim" described in "YEAR BOOK" in the TRA (The Tire and Rim Association, Inc.) standard. In the case of a tire that is not specified in any standard, the "normal rim" refers to the rim having the smallest rim diameter, and, next to this, refers to the rim having the smallest rim width, among rims to which the tire can be fitted and which allow the internal pressure of the tire to be maintained, that is, rims that do not cause air leakage from between the rim and the tire.
Moreover, the complex elastic modulus E* can be measured, for example, using a viscoelasticity measurement device such as "EPLEXOR (registered trademark)" manufactured by NETZSCH-Gerätebau GmbH.
2. Mechanism for Exhibiting Advantageous Effects in Tire According to Present Disclosure
The mechanism for exhibiting advantageous effects in the tire according to the present disclosure, that is, the mechanism by which a pneumatic tire having excellent ride comfort and steering stability during high speed running can be provided, is inferred as follows.
An example of a method for improving ride comfort during high speed running is a method in which the tread portion rubber gauge is increased to make it difficult to transmit vibrations from a road surface. When the tread portion rubber gauge is increased, even if the outer diameter of the tire is the same, the centrifugal force acting on the tread portion becomes larger, so that outer diameter growth is likely to occur during high speed running. As a result, there is a concern that the ground-contact shape, that is, the shape in the tire width direction of the tire surface, may be rounded and the steering stability during high speed running may decrease.
Therefore, in the present disclosure, as a belt layer that reinforces a tread, a belt layer in which cords (monofilament cords) made of a monofilament (single wire) are arranged instead of cords (twisted wire cords) made of a twisted wire is used. Since the monofilament cords have no twist and can be rigid cords, it is considered that the holding performance of the belt layer is enhanced, the tread portion is less likely to be deformed, and vibration is also less likely to occur.

However, in the case of a tire in which a belt layer using monofilament cords is used, the damping performance at the tread portion is decreased due to the high holding performance of the belt layer, making it easier to transmit even slight vibrations of the tread portion, so that there is a concern that the ride comfort may deteriorate. In particular, the frequency of repeated contact of the belt layer with the ground during running at high speed is increased, so that it is considered that the deterioration of ride comfort becomes remarkable.
Therefore, in the present disclosure, in addition to enhancing the holding performance of the belt layer by using the belt layer using monofilament cords, the product of the number e of the monofilament cords arranged (cords/5 cm) and the complex elastic modulus of the rubber composition covering the monofilament cords is increased as the tread portion rubber gauge G increases.
Accordingly, the reaction force generated at the belt layer can be increased while enhancing the holding performance, so that it is considered that it is possible to increase the force generated at the tread portion, while suppressing a change in the ground-contact shape, and it is also possible to enhance steering stability while maintaining ride comfort during high speed running.
That is, the complex elastic modulus E* is a parameter related to stiffness, and as the value thereof increases, the stiffness increases, so that it is considered that occurrence of rounding of the tread portion during high speed running can be suppressed, and a large reaction force can be easily obtained on the tread surface at the same time. Moreover, the stiffness of the entire tread surface can be increased, so that it is considered that it becomes easier to suppress large deformation of the tread portion when an impact is transmitted thereto.
On the other hand, the tread portion rubber gauge can be considered as a parameter indicating the centrifugal force acting on the tread portion and ride comfort, and it is considered that as the value thereof increases, the ride comfort becomes better, but the centrifugal force acting on the tread portion increases. Therefore, it is considered that, by increasing the product of the ends of the monofilament cords and the complex elastic modulus of the rubber composition covering the monofilament cords in response to an increase in the tread portion rubber gauge, the holding force against deformation of the tread portion is sufficiently ensured.
As a result of various experiments and studies, it is found that, when the ends e (cords/5 cm), the tread portion rubber gauge G (mm), and the complex elastic modulus E* (MPa) measured for the rubber composition under the conditions of temperature: 70°C, initial strain: 5%, dynamic strain: ±1%, and frequency: 10Hz with deformation mode: stretch, satisfy the following (Expression 1), it is also possible to enhance steering stability while maintaining ride comfort during high speed running.

$$e \div G \times E^* \geq 70 \qquad \text{(Expression 1)}$$

Moreover, it is found that the above "$e \div G \times E^*$" is more preferably not less than 75 and further preferably not less than 80.
In the present disclosure, the specific tread portion rubber gauge G (mm) is preferably not greater than 12.0 mm and more preferably not greater than 10.0 mm. If the tread portion rubber gauge G exceeds 12.0 mm, the distance from the tread portion surface to the belt layer becomes excessively long, so that it is considered that the contribution of the stiffness of the belt layer becomes insufficient and the improvement of steering stability during high speed running becomes insufficient. On the other hand, as for the lower limit, the tread portion rubber gauge G is preferably not less than 6.0 mm and more preferably not less than 8.0 mm. If the tread portion rubber gauge G is less than 6.0 mm, it becomes easier to transmit the impact from the tread portion to the belt layer, so that it is considered that the effect of improving the ride comfort of the tire is decreased.

[2] More Preferable Mode of Tire according to Present Disclosure

The tire according to present disclosure can achieve a greater effect by taking the following mode.

1. Improvement of Adhesiveness of Rubber Composition

In the tire according to the present disclosure, it is preferable to improve the adhesiveness of the rubber composition.
As described above, in the present disclosure, steel monofilament cords are used as the reinforcing cords of the belt layer. By making the reinforcing cords into monofilament cords as described above, the cords can be made rigid and difficult to stretch, and at the same time, it is also possible to decrease the wire diameters of the cords. Therefore, when the cords are covered with the same amount of the rubber composition, it is possible to reduce the rubber thickness of the entire belt layer, but during high speed running, the shearing strain per rubber thickness becomes larger, and the area of contact between the rubber and one steel cord becomes smaller, so that the risk of separation between the cords and the

rubber composition increases.

Therefore, it is preferable to improve the adhesiveness between the cords and the rubber composition to reduce the risk of the separation. At the same time, by improving the adhesiveness, the rubber composition and the codes are more firmly joined together, so that it is considered that it becomes easier to generate force at the belt layer and it becomes easier to improve the steering stability during high speed running.

As a specific means, a rubber composition containing 80 parts by mass or greater and 100 parts by mass or less of an isoprene-based rubber (IR) in 100 parts by mass of a rubber component and containing 5 parts by mass or greater and 80 parts by mass or less of carbon black and 0.1 parts by mass or greater and 5 parts by mass or less of an organic acid cobalt salt per 100 parts by mass of the rubber component is preferably used as a cord covering rubber.

It is considered that by using IR having excellent strength as the main component of the rubber component and containing an appropriate amount of carbon black having excellent reinforcing properties, the rubber covering the cords can exhibit sufficient strength, and by containing an appropriate amount of the organic acid cobalt salt, the adhesiveness with the steel monofilament cords can be improved.

At this time, when 0.1 parts by mass or greater and 5 parts by mass or less of an aliphatic (thiosulfate) sodium salt derivative such as hexamethylene-1,6-bis(thiosulfate) disodium salt dihydrate is contained per 100 parts by mass of the rubber component together with the organic acid cobalt salt, the initial adhesiveness/heat-resistant adhesiveness/water-resistant adhesiveness of the rubber composition with the steel monofilament cords can be balanced, so that the adhesiveness with the steel monofilament cords can be further improved.

Moreover, providing an adhesive layer between the rubber composition and each steel monofilament cord is also preferable as a means for improving the adhesiveness. Specifically, by applying an adhesive composition containing a polybenzoxazine compound containing any of units represented by the following (Chem. 1) to (Chem. 4), to the surface of each steel monofilament cord to form a coating layer, the rubber composition and the steel monofilament cord can be sufficiently adhered via the adhesive layer, so that the risk of the separation can be further reduced.

[Chem. 1]

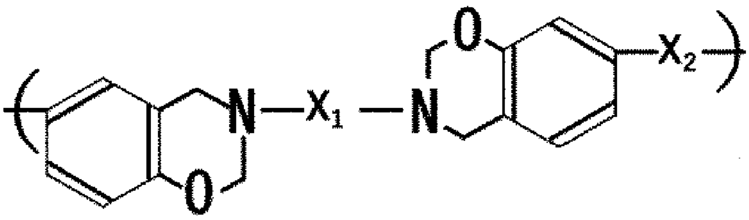

(Chem. 1)

[Chem. 2]

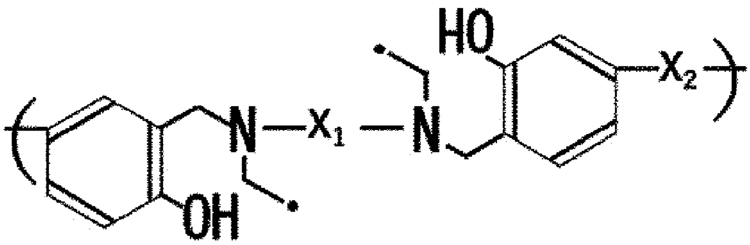

(Chem. 2)

[Chem. 3]

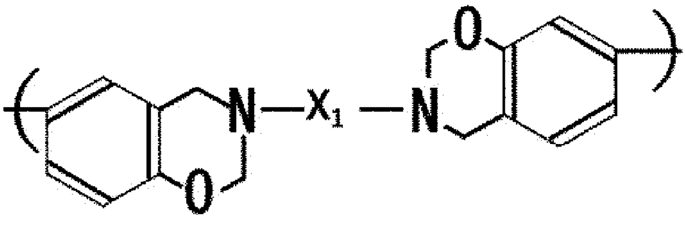

(Chem. 3)

[Chem. 4]

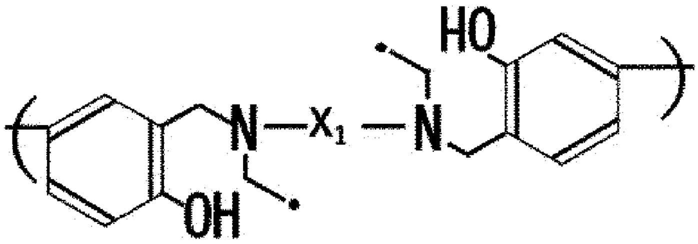

(Chem. 4)

In the above (Chem. 1) and (Chem. 2), $X_1$ is a hydrocarbon selected from aliphatic, alicyclic, and aromatic hydrocarbons, or a combination thereof, and may have a structure in which any of S, O, N, and P heteroatoms or these heteroatoms are continuously connected. $X_2$ has an (S)n structure in which n (1 to 8) S atoms are connected, and may have a hydrocarbon selected from aliphatic, alicyclic, and aromatic hydrocarbons, and any of S, O, N, and P and/or a combination thereof. Moreover, in (Chem. 3) and (Chem. 4), $X_1$ is a hydrocarbon selected from aliphatic, alicyclic, and aromatic hydrocarbons, or a combination thereof, and has an (S)n structure in which n (1 to 8) S atoms are connected.

2. Ends and Outer Diameters of Monofilament Cords (Auxiliary Cords)

In the present disclosure, the ends e (cords/5 cm) of the monofilament cords and a cross-sectional area A ($mm^2$) of each monofilament cord preferably satisfy $e \times A > 4.0$ (Expression 4) and more preferably satisfy $e \times A > 5.0$.

The product of the cross-sectional area A of one monofilament cord and the ends e is the total area of all the monofilament cords in a cross-section of the belt layer. By increasing the area of the monofilament cords in the cross-section of the belt layer as described above, the stiffness of the tread portion can be increased, and great input can be prevented from being added to the belt layer, so that it is considered that more excellent ride comfort can be exhibited during high speed running.

The cross-sectional shapes of the monofilament cords are each preferably a circular shape, but may be an elliptical shape or an oval shape.

The specific outer diameter of each monofilament cord is preferably not less than 0.1 mm and not greater than 0.5 mm. If the outer diameter of each monofilament cord is less than 0.1 mm, the force that can be generated at one monofilament cord is weak, and there is a possibility that sufficient stiffness cannot be exhibited, so that it is considered that there is a possibility that sufficient ride comfort cannot be exhibited during high speed running. On the other hand, if the outer diameter is greater than 0.5 mm, when the monofilament cords are arranged, there is a possibility that it becomes difficult to cover the monofilament cords with the rubber without gaps to form the belt layer, and at the same time, there is a concern that it becomes easier to transmit vibration between the cords, causing resonance. The outer diameter of each monofilament cord is more preferably not less than 0.15 mm and further preferably not less than 0.2 mm. On the other hand, as for the upper limit, the outer diameter of each monofilament cord is more preferably not greater than 0.40 mm and further preferably not greater than 0.35 mm.

The outer diameters of the monofilament cords can be measured according to JIS G 3510 for the cords taken out from the tire. In the case where the cross-sectional shape of each monofilament cord is a flat or oval shape and has a short diameter and a long diameter, when an angle formed by a long diameter $\Phi$ (mm) of the monofilament cord closest to the tire equator plane and a line parallel to the tire width direction is denoted by $\theta$, a distance, of the monofilament cord in the tire width direction, which is obtained as $\Phi \times \cos\theta$ is regarded as the outer diameter.

3. Angle of Monofilament Cords

In the present disclosure, the monofilament cords are preferably arranged at an angle of not less than 10° and not greater than 35° with respect to a straight line parallel to the tire circumferential direction.

By arranging the belt layer such that the monofilament cords are tilted at an appropriate angle, the tread portion can be firmly held over substantially the entire width thereof, and the amount of deformation of the tread portion during rolling can be reduced, so that it is considered that more excellent ride comfort can be exhibited during high speed running.

4. Making Belt Layer to Be Multilayered

In the present disclosure, the belt layer is multilayered by providing at least two layers, and at least one pair of belt layers adjacent to each other in the tire radial direction are preferably arranged with a distance of not less than 0.1 mm and

not greater than 0.8 mm therebetween. The distance is more preferably not less than 0.2 mm and further preferably not less than 0.3 mm. On the other hand, the distance is more preferably not greater than 0.7 mm and further preferably not greater than 0.6 mm.

Accordingly, the pair of belt layers can cooperate with each other to appropriately hold the tread portion to reduce the amount of deformation of the tread portion during rolling, and transmit the reaction force from the monofilament cords to a road surface in a well-balanced manner at all angles with respect to the tire axial direction, so that it is considered that more excellent steering stability can be exhibited during high speed running.

The above-described distance between the belt layers can be represented as an average distance in the width direction, and can be obtained by measuring the distance from the innermost layer portion on the surface side to the surface of the inner layer on the equator plane.

At this time, in the case where at least a pair of belt layers adjacent to each other are arranged such that the cords thereof intersect each other, a hoop effect can be achieved, and the tread portion can be firmly held over substantially the entire width thereof to reduce the amount of deformation of the tread portion during rolling, so that it is considered that further excellent steering stability and ride comfort can be exhibited during high speed running.

5. Shape of Tire

The tire according to the present disclosure preferably has the following shape.

(1) Cross-Sectional Width and Outer Diameter

In the present disclosure, when the cross-sectional width and the outer diameter of the tire when the tire is fitted on the normal rim and the internal pressure of the tire is set to 250 kPa are denoted by Wt (mm) and Dt (mm), respectively, the following (Expression 5) is preferably satisfied.

$$1650 \leq (Dt^2 \times \pi/4)/Wt \qquad \text{(Expression 5)}$$

By increasing an area $[(Dt/2)^2 \times \pi) = (Dt^2 \times \pi/4)]$ obtained when the tire is seen in the lateral direction, with respect to the cross-sectional width Wt of the tire, specifically, increasing this area to be greater than 1650, the moment of inertia of the tire can be increased and the rolling resistance in a steady state can be reduced, so that it is considered that a tire having excellent low fuel consumption performance can be provided. The area is more preferably not less than 1600 and further preferably not less than 1700, even further preferably not less than 1800, and particularly preferably not less than 1963.4.

However, since such a tire has a large area $[(Dt/2)^2 \times \pi) = (Dt^2 \times \pi/4)]$ obtained when the tire is seen in the lateral direction, with respect to the cross-sectional width Wt of the tire, the centrifugal force of the tire generally tends to be large, and the tread portion may become deformed in a round shape during high speed running, which may lead to deterioration of rolling resistance. In addition, during high speed running, as the centrifugal force increases, the outer diameter tends to grow larger, which may lead to a decrease in steering stability.

In the present disclosure, as described above, since the belt layer includes the steel monofilament cords covered with the rubber composition, during high speed running, the tread portion can be sufficiently held, and such deformation of the tread portion caused by the centrifugal force can be sufficiently suppressed.

Moreover, in the case where such a belt layer is used, deformation of the profile shape of the tread portion becomes smaller, and the responsiveness to shearing deformation of the belt layer becomes higher, so that it is considered that the steering stability during high speed running can be improved, and a decrease in the steering stability during high speed running can be suppressed.

In the above description, when the tire is fitted on the normal rim and the internal pressure of the tire is set to 250 kPa, the specific outer diameter Dt (mm) is, for example, preferably not less than 515 mm, more preferably not less than 558 mm, and further preferably not less than 600 mm.

On the other hand, the upper limit is not particularly limited, but the outer diameter Dt is preferably less than 843 mm, more preferably less than 725 mm, further preferably less than 707 mm, particularly preferably less than 685 mm, and most preferably less than 655 mm. It is considered that by setting the outer diameter Dt to be in the above range, a good moment of inertia can be obtained during rolling, and it becomes easier to generate a reaction force when a steering angle is formed.

The specific cross-sectional width Wt (mm) is, for example, preferably not less than 115 mm, more preferably not less than 130 mm, further preferably not less than 150 mm, and even more preferably not less than 170 mm.

On the other hand, the upper limit is not particularly limited, but the cross-sectional width Wt (mm) is preferably less than 305 mm, more preferably less than 245 mm, further preferably less than 210 mm, particularly preferably less than 205 mm, and most preferably less than 200 mm.

A specific cross-sectional height Ht (mm) is, for example, preferably not less than 37 mm, more preferably not less than 87 mm, and further preferably not less than 95 mm. On the other hand, the cross-sectional height Ht (mm) is preferably less than 180 mm and more preferably less than 120 mm.

(2) Circumferential Grooves of Tread Portion

In the tire according to the present disclosure, preferably, the tread portion has a plurality of circumferential grooves, and the total of the cross-sectional areas of the plurality of circumferential grooves is not less than 10% and not greater than 30% of the cross-sectional area of the tread portion. Accordingly, it is considered that movement of the tread portion can be suppressed and more excellent ride comfort can be exhibited during high speed running. The total of the cross-sectional areas of the plurality of circumferential grooves is more preferably not less than 15%, further preferably not less than 18%, and particularly preferably not less than 21%. On the other hand, the total of the cross-sectional areas of the plurality of circumferential grooves is more preferably not greater than 27%, further preferably not greater than 25%, and particularly preferably not greater than 23%.

The above-described cross-sectional areas of the circumferential grooves refer to the total value of the areas each formed by a groove wall and a straight line connecting end portions of the tread circumferential groove in the tire in a state where the tire is fitted on the normal rim, the internal pressure of the tire is set to 250 kPa, and no load is applied to the tire, and can be simply obtained in a state where a portion between the bead portions of a section obtained by cutting the tire with a width of 2 to 4 cm in the radial direction is pressed so as to match the rim width.

The cross-sectional area of the tread portion refers to the area on the outer side in the tire radial direction with respect to the belt layer, in a region demarcated by a straight line connecting the end portions of the circumferential groove of the tread portion and two straight lines that pass through a tread surface profile formed by the tread surface and end portions of a layer having the largest width in the belt layer and that are parallel to the equator plane, in a cross-section in the radial direction of the tire in a state where the tire is fitted on the normal rim, the internal pressure of the tire is set to 250 kPa, and no load is applied to the tire. In the case where a belt reinforcing layer using organic fibers and/or steel cords is provided on the outer side in the tire radial direction with respect to the belt layer, the cross-sectional area of the tread portion refers to the area on the outer side in the radial direction with respect to the belt reinforcing layer.

Moreover, the ratio ($L_{80}/L_0$) of a groove width $L_{80}$ at a depth, which is 80% of the maximum depth of the circumferential groove, to a groove width $L_0$ on the ground-contact surface of the tread portion is preferably not less than 0.3 and not greater than 0.7. The ratio ($L_{80}/L_0$) is more preferably not less than 0.35, further preferably not less than 0.40, and particularly preferably not less than 0.45. On the other hand, the ratio ($L_{80}/L_0$) is more preferably not greater than 0.65, further preferably not greater than 0.60, and particularly preferably not greater than 0.55.

Accordingly, at the bottom surface of a land portion of the tread portion, movement of the entire land portion can be suppressed, and more excellent ride comfort can be exhibited during high speed running.

The above-described $L_0$ and $L_{80}$ refer to the linear distance ($L_0$) between the groove end portions at the tread surface portion of the tread circumferential groove of the tire and the minimum distance ($L_{80}$) between the groove wall portions at the position corresponding to 80% of the groove depth, in a state where the tire is fitted on the normal rim, the internal pressure of the tire is set to 250 kPa, and no load is applied to the tire. Simply, the $L_0$ and $L_{80}$ can be obtained in a state where a portion between the bead portions of a section obtained by cutting the tire with a width of 2 to 4 cm in the radial direction is pressed so as to match the rim width.

(3) Lateral Grooves

In the present disclosure, the tread portion further has a plurality of lateral grooves extending in the tire axial direction, and the total of the volumes of the plurality of lateral grooves is preferably not less than 2.0% and not greater than 5.0% of the volume of the tread portion. The total of the volumes of the plurality of lateral grooves is more preferably not less than 2.2%, further preferably not less than 2.5%, and particularly preferably not less than 2.7%. On the other hand, the total of the volumes of the plurality of lateral grooves is more preferably not greater than 4.0%, further preferably not greater than 3.5%, and particularly preferably not greater than 3.0%.

Accordingly, movement of the tread portion can be suppressed, and more excellent ride comfort can be exhibited during high speed running.

The above-described volume of the tread portion refers to the volume obtained by extending the area of the tread portion in the tire circumferential direction. The volume of the tread portion can be simply obtained by multiplying the area of the tread portion by the length of the tire outer circumference (outer diameter $Dt \times \pi$). In addition, the volumes of the lateral grooves refer to the total value of the volumes each formed by a surface connecting the end portions of the lateral groove and the groove wall in the tire in a state where the tire is fitted on the normal rim, the internal pressure of the tire is set to 250 kPa, and no load is applied to the tire, and can be calculated by obtaining the volume of each lateral groove.

Moreover, the volumes of the lateral grooves refer to the total value of the volumes each formed by a surface

connecting the end portions of the lateral groove and the groove wall in the tire in a state where the tire is fitted on the normal rim, the internal pressure of the tire is set to 250 kPa, and no load is applied to the tire, and can be simply obtained by calculating the volume of each lateral groove in a state where a portion between the bead portions of a section obtained by cutting the tire with a width of 2 to 4 cm in the radial direction is pressed so as to match the rim width.

[3] Embodiment

Hereinafter, the present disclosure will be specifically described based on an embodiment.

1. Rubber Composition

(1) Blending Materials

The rubber composition included in the belt layer of the tire according to the present disclosure can be obtained from a rubber component and other blending materials described below.

(a) Rubber Component

In the present embodiment, the rubber component is not particularly limited, and rubbers (polymers) generally used in the production of tires, such as isoprene-based rubbers, diene-based rubbers such as butadiene rubber (BR), styrene-butadiene rubber (SBR), and nitrile rubber (NBR), and butyl-based rubbers such as isobutylene-isoprene-rubber, can be used. Among them, isoprene-based rubbers are preferable, and natural rubber (NR) is preferably used since the cis structure of polyisoprene is close to 100% and the tensile strength is better than that of the other rubber components. BR or SBR may be also used as necessary.

(I) Isoprene-Based Rubber

The amount (total amount) of the isoprene-based rubber in 100 parts by mass of the rubber component is preferably not less than 80 parts by mass and more preferably not less than 90 parts by mass.

Examples of the isoprene-based rubber include natural rubber (NR), isoprene rubber (IR), reformed NR, modified NR, and modified IR, and NR is preferable since NR has excellent strength.

As the NR, for example, NRs that are generally used in the tire industry, such as SIR20, RSS#3, and TSR20, can be used. The IR is not particularly limited, and, as the IR, for example, IRs that are generally used in the tire industry, such as IR2200, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination.

(II) Other Rubber Component

As another rubber component, a rubber (polymer) generally used in the production of tires, such as butadiene rubber (BR), styrene-butadiene rubber (SBR), and nitrile rubber (NBR), may be contained as necessary. The amount (total amount) of these rubber components in 100 parts by mass of the rubber component is preferably not greater than 20 parts by mass and more preferably not greater than 10 parts by mass.

(b) Blending Materials Other Than Rubber Component

(I) Filler

In the present embodiment, the rubber composition preferably contains a filler. Specific examples of the filler include carbon black, silica, graphite, calcium carbonate, talc, alumina, clay, aluminum hydroxide, and mica. Among them, carbon black can be preferably used as a reinforcing agent.

(i) Carbon Black

The rubber composition preferably contains carbon black as necessary. The amount of the carbon black per 100 parts by mass of the rubber component is, for example, preferably not less than 5 parts by mass and not greater than 80

parts by mass, more preferably not less than 40 parts by mass and not greater than 70 parts by mass, and further preferably not less than 50 parts by mass and not greater than 60 parts by mass.

The carbon black is not particularly limited, and examples of the carbon black include: furnace black (furnace carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; and channel black (channel carbon black) such as EPC, MPC, and CC. These carbon blacks may be used individually, or two or more of these carbon blacks may be used in combination.

From the viewpoint of appropriate reinforcing properties, the BET specific surface area of the carbon black is, for example, preferably greater than 30 $m^2/g$ and less than 250 $m^2/g$. The above BET specific surface area is a value of nitrogen adsorption specific surface area ($N_2SA$) measured by the BET method according to ASTM D3037-93.

The above BET specific surface area of the carbon black is more preferably not greater than 45 $m^2/g$. By using large-particle-diameter carbon black having a BET specific surface area of not greater than 45$m^2/g$, the heat generation properties of the rubber during high speed running can be appropriately reduced, and the stiffness, that is, the complex elastic modulus E*, of the rubber can be improved. As a result, softening of the rubber and a decrease in holding performance during high speed running can be suppressed, and a sufficient reaction force can be generated under sufficient holding performance. In this case, the amount of the carbon black per 100 parts by mass of the rubber component is preferably not less than 5 parts by mass and not greater than 60 parts by mass.

Moreover, from the viewpoint of obtaining appropriate flexibility, the average primary particle diameter of the above carbon black is preferably not less than 25 nm and more preferably not less than 40 nm. On the other hand, from the viewpoint of reinforcing the rubber composition and obtaining a good reaction force, the average primary particle diameter is preferably not greater than 75 nm and more preferably not greater than 70 nm. In this case as well, the amount of the carbon black per 100 parts by mass of the rubber component is preferably not less than 5 parts by mass and not greater than 60 parts by mass.

The average primary particle diameter of the above carbon black can be calculated by directly observing the carbon black taken out from the rubber composition taken out from the tire, using an electron microscope (TEM) or the like, calculating a cross-sectional area diameter from the area of each obtained particle of the carbon black, and obtaining the average value of these diameters.

Moreover, the dibutyl phthalate (DBP) absorption amount of the carbon black is, for example, greater than 50 ml/100 g and less than 250 ml/100 g. The DBP absorption amount of the carbon black is measured according to ASTM D2414-93.

The carbon black is not particularly limited, and specific examples of the carbon black include N134, N110, N220, N234, N219, N339, N330, N326, N351, N550, and N762. As commercially available products, products of Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon Co., etc., can be used. These carbon blacks may be used individually, or two or more of these carbon blacks may be used in combination.

(ii-1) Silica

The rubber composition may contain silica as necessary. In the case where silica is used, a silane coupling agent is preferably used together.

From the viewpoint of obtaining good durability, the BET specific surface area of the silica is preferably greater than 140 $m^2/g$ and more preferably greater than 160 $m^2/g$. On the other hand, from the viewpoint of obtaining good rolling resistance during high speed running, the BET specific surface area of the silica is preferably less than 250 $m^2/g$ and more preferably less than 220 $m^2/g$. The above BET specific surface area is a value of $N_2SA$ measured by the BET method according to ASTM D3037-93.

In the case where silica is used as a filling reinforcing agent, from the viewpoint of obtaining good durability, the amount of the silica per 100 parts by mass of the rubber component is preferably greater than 35 parts by mass and more preferably greater than 40 parts by mass. On the other hand, from the viewpoint of obtaining good rolling resistance during high speed running, the amount of the silica is preferably less than 150 parts by mass, more preferably less than 70 parts by mass, further preferably less than 65 parts by mass, and particularly preferably less than 60 parts by mass.

Examples of the silica include dry-process silica (anhydrous silica) and wet-process silica (hydrous silica). Between them, wet-process silica is preferable for the reason that it has a higher silanol group content.

As the silica, for example, products of Evonik Industries Ag, Rhodia, Tosoh Silica Corporation, Solvay Japan, Ltd., Tokuyama Corporation, etc., can be used.

(ii-2) Silane Coupling Agent

In the case where silica is used as a filling reinforcing agent, the rubber composition preferably contains a silane

coupling agent together with the silica. The silane coupling agent is not particularly limited, and examples of the silane coupling agent include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive Performance Materials, Inc.; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These silane coupling agents may be used individually, or two or more of these silane coupling agents may be used in combination.

As the silane coupling agent, for example, products of Evonik Industries Ag, Momentive Performance Materials, Inc., Shin-Etsu Silicones, Tokyo Chemical Industry Co., Ltd., AZmax.co, Dow Corning Toray Co., Ltd., etc., can be used.

The amount of the silane coupling agent per 100 parts by mass of the silica is, for example, greater than 3 parts by mass and less than 25 parts by mass.

(iii) Other Filler

In addition to the above-described carbon black, the rubber composition may further contain fillers generally used in the tire industry, such as graphite, calcium carbonate, talc, alumina, clay, aluminum hydroxide, and mica, as necessary. The amount of each of these fillers per 100 parts by mass of the rubber component is, for example, greater than 0.1 parts by mass and less than 200 parts by mass. In the case where silica is used, a silane coupling agent is preferably used together.

(II) Curable Resin Component

The rubber composition preferably contains a phenol resin and/or a melamine resin as a curable resin component. Accordingly, the adhesiveness with the steel cords can be improved without significantly deteriorating heat generation properties and elongation at break, and a large reaction force can be easily generated at the rubber and the steel cords.

Specific examples of the phenol resin include PR12686 (cashew oil-modified phenol resin) manufactured by Sumitomo Bakelite Co., Ltd., and specific examples of the melamine resin include SUMIKANOL 507AP (modified etherified methylol melamine resin) manufactured by Taoka Chemical Co., Ltd.

From the viewpoint of sufficiently improving the complex elastic modulus and obtaining a large reaction force during deformation, the amount of the curable resin component per 100 parts by mass of the rubber component is preferably not less than 1 part by mass and more preferably not less than 2 parts by mass. On the other hand, from the viewpoint of maintaining break strength, the amount of the curable resin component is preferably not greater than 10 parts by mass, more preferably not greater than 8 parts by mass, and further preferably not greater than 5 parts by mass.

When the melamine resin is used, a methylene donor is preferably contained as a curing agent in combination. Examples of the methylene donor include hexamethylenetetramine (HMT), hexamethoxy methylol melamine (HMMM), and hexamethylol melamine pentamethyl ether (HMMPME), and the methylene donor is preferably contained, for example, in an amount of not less than 5 parts by mass and not greater than 15 parts by mass per 100 parts by mass of the curable resin component. If the amount of the methylene donor is excessively small, there is a possibility that a sufficient complex elastic modulus is not obtained. On the other hand, if the amount of the methylene donor is excessively large, there is a possibility that the viscosity of the rubber increases and the processability deteriorates.

As a specific methylene donor, for example, SUMIKANOL 507 manufactured by Taoka Chemical Co., Ltd., etc., can be used.

(III) Plasticizer Component

The rubber composition may contain an oil (including extender oil) as a component for softening the rubber, a liquid rubber, and a resin as a plasticizer. The plasticizer component is a component that can be extracted from a vulcanized rubber with acetone. The total amount of the plasticizer component per 100 parts by mass of the rubber component is preferably greater than 1 part by mass and more preferably not less than 2 parts by mass. On the other hand, the total amount of the plasticizer component is preferably less than 20 parts by mass and more preferably less than 10

parts by mass. The amount of the oil incudes the amount of oil included in rubber (oil-extended rubber).

(i) Oil

Examples of the oil include mineral oils (generally called process oils), vegetable fats and oils, and mixtures thereof. As the mineral oil (process oil), for example, paraffinic process oil, aromatic process oil, naphthenic process oil, or the like can be used. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. These oils may be used individually, or two or more of these oils may be used in combination.

As the specific process oil (mineral oil), for example, products of Idemitsu Kosan Co., Ltd., Sankyo Yuka Kogyo K.K., ENEOS Corporation, Olisoy, H&R, Hokoku Corporation, Showa Shell Sekiyu K.K., FUJI KOSAN COMPANY, LTD., etc., can be used.

(ii) Liquid Rubber

The liquid rubber described as a plasticizer is a polymer in a liquid state at room temperature (25°C), and is a rubber component that can be extracted from the tire after vulcanization, by extraction with acetone. Examples of the liquid rubber include a farnesene-based polymer, a liquid diene-based polymer, and hydrogenated products thereof.

The farnesene-based polymer is a polymer obtained by polymerizing farnesene, and has a structural unit based on farnesene. As farnesene, there are isomers such as $\alpha$-farnesene ((3E,7E)-3,7,11-trimethyl-1,3,6,10-dodecatetraene) and $\beta$-farnesene (7,11-dimethyl-3-methylene-1,6,10-dodecatriene).

The farnesene-based polymer may be a homopolymer of farnesene (farnesene homopolymer), or a copolymer of farnesene and a vinyl monomer (farnesene-vinyl monomer copolymer).

Examples of the liquid diene-based polymer include liquid styrene-butadiene copolymers (liquid SBRs), liquid butadiene polymers (liquid BRs), liquid isoprene polymers (liquid IRs), and liquid styrene-isoprene copolymers (liquid SIRs).

The liquid diene-based polymer is, for example, a polymer having a weight-average molecular weight (Mw), of greater than $1.0\times10^3$ and less than $2.0\times10^5$, measured by gel permeation chromatography (GPC) in terms of polystyrene. In the present description, the Mw of the liquid diene-based polymer is a value that is measured by gel permeation chromatography (GPC) and obtained by polystyrene conversion.

The amount of the liquid rubber (total amount of a liquid farnesene-based polymer, a liquid diene-based polymer, etc.) per 100 parts by mass of the rubber component is, for example, greater than 1 part by mass and less than 100 parts by mass.

As the liquid rubber, for example, products of KURARAY CO., LTD., Cray Valley, etc., can be used.

(iii) Resin Component

The resin component also functions as an adhesiveness imparting component, and may be solid or liquid at room temperature. Specific examples of the resin component include rosin-based resins, styrene-based resins, coumarone-based resins, terpene-based resins, C5 resins, C9 resins, C5C9 resins, and acrylic-based resins, and two or more of these resins may be used in combination. The amount of the resin component per 100 parts by mass of the rubber component is preferably greater than 2 parts by mass and less than 45 parts by mass, and more preferably less than 30 parts by mass.

The rosin-based resins refer to resins that are obtained by processing pinene resin and contain rosin acid as a main component. The rosin-based resins (rosins) can be classified depending on whether the rosins are modified or not, that is, can be classified into non-modified rosins (unmodified rosins) and modified rosin products (rosin derivatives). Examples of non-modified rosins include tall rosin (also called tall oil rosin), gum rosin, wood rosin, disproportionated rosins, polymerized rosins, hydrogenated rosins, and other chemically altered rosins. Modified rosins are obtained by modifying non-modified rosins, and examples of modified rosin products include rosin esters, unsaturated carboxylic acid-modified rosins, unsaturated carboxylic acid-modified rosin esters, amide compounds of rosins, and amine salts of rosins.

The styrene-based resins are each a polymer for which a styrene-based monomer is used as a constituent monomer, and examples of the styrene-based resins include a polymer obtained by polymerization with a styrene-based monomer as a main component (not less than 50% by mass). Specific examples of the styrene-based resins include homopolymers obtained by individually polymerizing styrene-based monomers (styrene, o-methylstyrene, m-methylstyrene, p-methylstyrene, $\alpha$-methylstyrene, p-methoxystyrene, p-tert-butylstyrene, p-phenylstyrene, o-chlorostyrene, m-chlorostyrene, p-chlorostyrene, etc.), copolymers each obtained by copolymerizing two or more styrene-based monomers, and copolymers of styrene-based monomers and other monomers that can be copolymerized with styrene-based monomers.

Examples of the other monomers include: acrylonitriles such as acrylonitrile and methacrylonitrile; acrylics; unsaturated carboxylic acids such as methacrylic acid; unsaturated carboxylic acid esters such as methyl acrylate and methyl methacrylate; dienes such as chloroprene and butadiene isoprene; olefins such as 1-butene and 1-pentene; and α, β-unsaturated carboxylic acids or acid anhydrides thereof such as maleic anhydride.

Among the coumarone-based resins, coumarone-indene resins are preferable. The coumarone-indene resins are each a resin containing coumarone and indene as monomer components that form the skeleton (main chain) of the resin. Examples of the monomer components contained in the skeleton other than coumarone and indene include styrene, α-methylstyrene, methylindene, and vinyltoluene.

The amount of the coumarone-indene resin per 100 parts by mass of the rubber component is, for example, greater than 1.0 part by mass and less than 50.0 parts by mass.

The hydroxyl value (OH value) of the coumarone-indene resin is, for example, greater than 15 mg KOH/g and less than 150 mg KOH/g. The OH value is represented, in milligrams, as an amount of potassium hydroxide that is required to neutralize acetic acid bound to hydroxyl groups when 1 g of the resin is acetylated, and is a value measured by potentiometric titration (JIS K0070: 1992).

The softening point of the coumarone-indene resin is, for example, higher than 30°C and lower than 160°C. The softening point is a softening point that is measured with a ring and ball softening point measuring device according to JIS K6220-1: 2001 and that is a temperature at which a ball has descended.

Examples of the terpene-based resins include polyterpenes, terpene phenols, and aromatic modified terpene resins. The polyterpenes are resins obtained by polymerizing terpene compounds, and hydrogenated products thereof. The above terpene compounds are hydrocarbons represented by a composition of $(C_5H_8)_n$ and oxygenated derivatives thereof, and are compounds having, as a basic backbone, a terpene classified into monoterpene ($C_{10}H_{16}$), sesquiterpene ($C_{15}H_{24}$), diterpene ($C_{20}H_{32}$), and the like. Examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the polyterpenes include terpene resins formed from the above-described terpene compounds such as α-pinene resin, β-pinene resin, limonene resin, dipentene resin, and β-pinene-limonene resin, and hydrogenated terpene resins obtained by hydrogenating the terpene resins. Examples of the terpene phenols include resins obtained by copolymerization of the above terpene compound and a phenolic compound, and resins obtained by hydrogenating the resins, and specific examples of the terpene phenols include resins obtained by condensation of the above terpene compound, a phenolic compound, and formalin. Examples of the phenolic compounds include phenol, bisphenol A, cresol, and xylenol. Examples of the aromatic modified terpene resins include resins obtained by modifying a terpene resin with an aromatic compound, and resins obtained by hydrogenating the resins. Here, the aromatic compound is not particularly limited as long as the aromatic compound is a compound having an aromatic ring. Examples of the aromatic compound include: phenolic compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene derivatives such as styrene, alkylstyrenes, alkoxystyrenes, and unsaturated hydrocarbon group-containing styrenes; coumarone; and indene.

The "C5 resins" refer to resins obtained by polymerizing a C5 fraction. Examples of the C5 fraction include petroleum fractions having 4 to 5 carbon atoms such as cyclopentadiene, pentene, pentadiene, and isoprene. As the C5 resins, dicyclopentadiene resins (DCPD resins) are suitably used.

The "C9 resins" refer to resins obtained by polymerizing a C9 fraction, and may be hydrogenated or modified products of the resins. Examples of the C9 fraction include petroleum fractions having 8 to 10 carbon atoms such as vinyltoluene, alkylstyrene, indene, and methylindene. As specific examples of the C9 resins, coumarone-indene resins, coumarone resins, indene resins, and aromatic vinyl-based resins are suitably used. As the aromatic vinyl-based resin, a homopolymer of α-methylstyrene or styrene or a copolymer of α-methylstyrene and styrene is preferable, and a copolymer of α-methylstyrene and styrene is more preferable, for the reasons that the polymer is economic, is easily processed, and has excellent heat generation properties. As the aromatic vinyl-based resins, for example, products commercially available from Kraton Corporation, Eastman Chemical Company, etc., can be used.

The "C5C9 resins" refer to resins obtained by copolymerizing the C5 fraction and the C9 fraction, and may be hydrogenated or modified products of the resins. Examples of the C5 fraction and the C9 fraction include the above-described petroleum fractions. As the C5C9 resins, for example, products commercially available from Tosoh Corporation, Zibo Luhua Hongjin New Material Co., Ltd., etc., can be used.

The acrylic-based resins are not particularly limited, but, for example, a non-solvent type acrylic-based resin can be used.

An example of the non-solvent type acrylic-based resin is a (meth)acrylic-based resin (polymer) synthesized by a high-temperature continuous polymerization method (high-temperature continuous bulk polymerization method) (the methods disclosed in US Patent No. 4,414,370, Japanese Laid-Open Patent Publication No. S59-6207, Japanese Examined Patent Publication No. H5-58005, Japanese Laid-Open Patent Publication No. H1-313522, US Patent No.

5,010,166, annual research report of Toagosei Co., Ltd., TREND 2000, No. 3, pages 42-45, etc.) by avoiding use of a polymerization initiator, a chain transfer agent, an organic solvent, etc., which are sub-materials, as much as possible. In the present invention, (meth)acrylic means methacrylic and acrylic.

Examples of the monomer component that forms the acrylic-based resin include (meth)acrylic acids, (meth) acrylic acid esters (alkyl esters, aryl esters, aralkyl esters, etc.), (meth)acrylamide, and (meth)acrylic acid derivatives such as (meth)acrylamide derivatives.

Moreover, as the monomer component that forms the acrylic-based resin, an aromatic vinyl such as styrene, α-methylstyrene, vinyltoluene, vinylnaphthalene, divinylbenzene, trivinylbenzene, and divinylnaphthalene may be used together with (meth)acrylic acid or a (meth)acrylic acid derivative.

The acrylic-based resin may be a resin composed of only a (meth)acrylic component, or may be a resin also containing a component other than the (meth)acrylic component. In addition, the acrylic-based resin may have a hydroxyl group, a carboxyl group, a silanol group, or the like.

As the resin component, for example, products of Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., etc., can be used.

(IV) Organic Acid Metal Salt

The rubber composition preferably contains an organic acid cobalt salt as an organic acid metal salt. The organic acid cobalt salt serves to improve the adhesiveness between the cords and the rubber, so that the adhesiveness between the cords and the rubber can be improved by blending this component.

As the specific organic acid cobalt salt, cobalt salts of acetylacetonic acid, fumaric acid, pentanoic acid, acetic acid, benzoic acid, and derivatives thereof, etc., can be preferably used, cobalt salts of boron-containing organic acids are more preferable, and among them, cobalt boron neodecanoate is particularly preferably used.

The amount of the organic acid cobalt salt per 100 parts by mass of the rubber component is preferably not less than 0.1 parts by mass, more preferably not less than 0.5 parts by mass, and further preferably not less than 1 part by mass. On the other hand, as for the upper limit, the amount of the organic acid cobalt salt is preferably not greater than 5 parts by mass, more preferably not greater than 3 parts by mass, and further preferably not greater than 2 parts by mass. If the amount of the organic acid cobalt salt is excessively small, there is a possibility that the adhesiveness between the plating layers of the steel cords and the rubber cannot be sufficiently ensured. On the other hand, if the amount of the organic acid cobalt salt is excessively large, there is a possibility that oxidative deterioration of the rubber becomes remarkable, and the break characteristics deteriorate.

As a chemical other than the above-described organic acid cobalt salt, a chemical obtained by appropriately replacing cobalt element with an element having an ionization tendency between zinc and copper may be used. Examples of such a metal element include iron, nickel, tin, antimony, and bismuth.

In the present disclosure, together with the organic acid cobalt salt, an aliphatic (thiosulfate) sodium salt derivative such as hexamethylene-1,6-bis(thiosulfate) disodium salt dihydrate is preferably contained in an amount of not less than 0.1 parts by mass and not greater than 5 parts by mass per 100 parts by mass of the rubber component.

Since the aliphatic (thiosulfate) sodium salt derivative contains a sulfur atom, the aliphatic (thiosulfate) sodium salt derivative also functions as a crosslinking agent, can balance the initial adhesiveness/heat-resistant adhesiveness/-water-resistant adhesiveness of the rubber composition with the steel monofilament cords, and can improve the adhesiveness with the steel monofilament cords.

Specific examples of the aliphatic (thiosulfate) sodium salt derivative include DURALINK HTS (hexamethylene-1,6-bis(thiosulfate) disodium salt dihydrate) manufactured by Flexsys.

(V) Antioxidant

The rubber composition preferably contains an antioxidant. The amount of the antioxidant per 100 parts by mass of the rubber component is, for example, greater than 0.5 parts by mass and less than 10 parts by mass, and more preferably not less than 1 part by mass.

Examples of the antioxidant include: naphthylamine-based antioxidants such as phenyl-α-naphthylamine; diphenylamine-based antioxidants such as octylated diphenylamine and 4,4'-bis(α,α'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol-based antioxidants such as 2,6-di-t-butyl-4-methylphenol and styrenated phenol; and bis-, tris-, and poly-phenol-based antioxidants such as tetrakis-[methylene-3-(3',5'-di-t-butyl-4'-hydroxyphenyl)propionate]methane. These antioxidants may be used individually, or two or more of these antioxidants

may be used in combination.

As the antioxidant, for example, products of Seiko Chemical Co., Ltd., SUMITOMO CHEMICAL COMPANY, LIMITED, Ouchi Shinko Chemical Industrial Co., Ltd., Flexsys, etc., can be used.

(VI) Zinc Oxide

The rubber composition may contain zinc oxide. The amount of the zinc oxide per 100 parts by mass of the rubber component is preferably not greater than 15 parts by mass.

As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

(VII) Crosslinking Agent and Vulcanization Accelerator

The rubber composition preferably contains a crosslinking agent such as sulfur. Examples of the sulfur include powdery sulfur, precipitated sulfur, colloidal sulfur, insoluble sulfur, highly dispersible sulfur, and soluble sulfur, which are generally used in the rubber industry. These sulfurs may be used individually, or two or more of these sulfurs may be used in combination.

The amount of the sulfur per 100 parts by mass of the rubber component is preferably not greater than 8 parts by mass.

As the sulfur, for example, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used.

Examples of crosslinking agents other than the sulfur include vulcanizing agents containing sulfur atoms, such as TACKIROL V200 manufactured by Taoka Chemical Co., Ltd. and KA9188 (1,6-bis(N,N'-dibenzylthiocarbamoyldithio) hexane) manufactured by LANXESS, and organic peroxides such as dicumyl peroxide.

The rubber composition preferably contains a vulcanization accelerator. The amount of the vulcanization accelerator per 100 parts by mass of the rubber component is, for example, greater than 0.3 parts by mass and less than 10.0 parts by mass.

Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination.

(VIII) Others

In addition to the above-described components, additives generally used in the tire industry, such as fatty acid metal salts, carboxylic acid metal salts, organic peroxides, and a reversion inhibitor may be further blended in the rubber composition as necessary. The amount of each of these additives per 100 parts by mass of the rubber component is, for example, greater than 0.1 parts by mass and less than 200 parts by mass.

(2) Production of Rubber Composition

Each rubber composition described above is produced by a general method; for example, a production method including a base kneading step of kneading a rubber component and a filler such as carbon black and a finish kneading step of kneading a crosslinking agent and a kneaded product obtained in the base kneading step.

The kneading can be performed by using, for example, a known (sealed type) kneading machine such as a Banbury mixer, a kneader, and an open roll.

In the base kneading step, the kneading temperature is, for example, higher than 50°C and lower than 200°C, and the kneading time is, for example, longer than 30 seconds and shorter than 30 minutes. In the base kneading step, in addition to the above components, ingredients that are conventionally used in the rubber industry, for example, a softener such as oil, zinc oxide, an antioxidant, a wax, a vulcanization accelerator, etc., may be appropriately added and kneaded as necessary.

In the finish kneading step, the crosslinking agent and the kneaded product obtained in the base kneading step

are kneaded. In the finish kneading step, the kneading temperature is, for example, higher than room temperature and lower than 80°C, and the kneading time is, for example, longer than 1 minute and shorter than 15 minutes. In the finish kneading step, in addition to the above components, a vulcanization accelerator, zinc oxide, etc., may be appropriately added and kneaded as necessary.

2. Production of Belt Member

A belt member can be produced by topping the rubber composition obtained above on both sides of reinforcing cords (steel monofilament cords) arranged in parallel at predetermined intervals (ends).

In the present disclosure, preferably, prior to topping of the rubber composition, an adhesive composition is applied to the surface of each reinforcing cord to form a coating layer thereon. It is considered that by causing the coating layer to function as an adhesive layer to sufficiently adhere the rubber composition and each steel monofilament cord to each other, it is possible to firmly adhere the rubber composition and each steel monofilament cord to each other.

As the adhesive composition, an adhesive composition containing a polybenzoxazine compound containing any of units represented by the following (Chem. 1) to (Chem. 4) is preferable, since the adhesive composition exhibits excellent adhesiveness to both the rubber composition and the steel monofilament cords.

[Chem. 5]

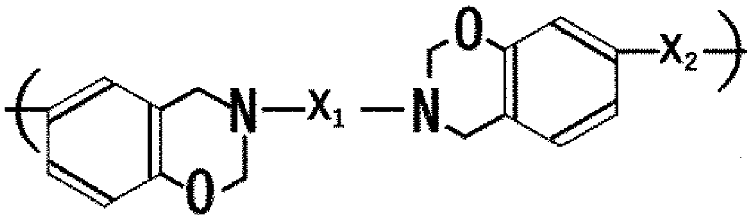

(Chem. 1)

[Chem. 6]

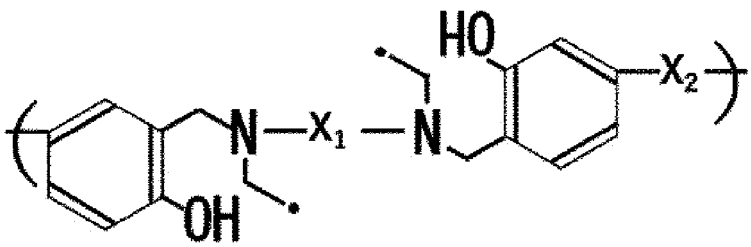

(Chem. 2)

[Chem. 7]

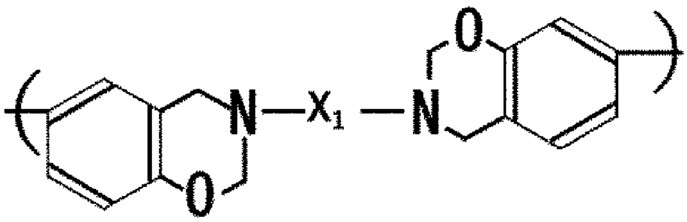

(Chem. 3)

[Chem. 8]

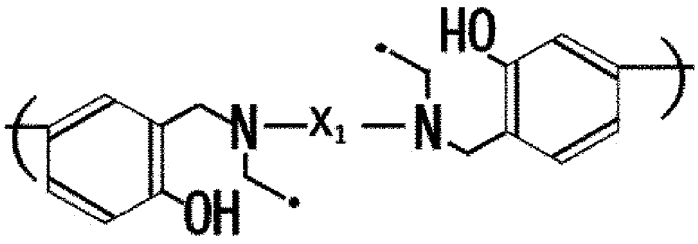

(Chem. 4)

In the above (Chem. 1) and (Chem. 2), $X_1$ is a hydrocarbon selected from aliphatic, alicyclic, and aromatic hydrocarbons, or a combination thereof, and may have a structure in which any of S, O, N, and P heteroatoms or these heteroatoms are continuously connected. $X_2$ has an (S)n structure in which n (1 to 8) S atoms are connected, and may have a hydrocarbon selected from aliphatic, alicyclic, and aromatic hydrocarbons, and any of S, O, N, and P and/or a combination thereof. Moreover, in (Chem. 3) and (Chem. 4), $X_1$ is a hydrocarbon selected from aliphatic, alicyclic, and aromatic hydrocarbons, or a combination thereof, and has an (S)n structure in which n (1 to 8) S atoms are connected.

The above-described adhesive composition can be produced, for example, by using a known method described in US2020/0290402 (Japanese Laid-Open Patent Publication (translation of PCT application) No. 2019-507805) or the like, and an adhesive layer can be formed on the surface of each steel monofilament cord by applying a coating liquid of the obtained adhesive composition to the surface of each steel monofilament cord, drying the coating liquid, then performing thermal-crosslinking.

3. Production of Tire

The tire according to the present disclosure can be produced as an unvulcanized tire through shaping the belt member obtained above together with other tire members on a tire shaping machine by a normal method.

Specifically, an unvulcanized tire is produced by winding, on a shaping drum, an inner liner as a member for ensuring the airtightness of the tire, a carcass as a member for withstanding the load, impact, and filling air pressure received by the tire, a belt member as a member for strongly tightening the carcass to increase the stiffness of a tread, etc., placing bead portions as members for fixing both ends of the carcass to both side edge portions and fixing the tire to a rim, shaping these members into a toroid shape, then attaching a tread to a center portion of the outer periphery, and attaching sidewalls on the radially outer side to form side portions.

In the present embodiment, as described above, as the belt layer, a plurality of layers may be provided from the viewpoint of increasing the holding force to the tread during running and facilitating suppression of growth of the outer diameter. At this time, an average distance D (mm) between the cords of the belt layers at the tread portion in the tire after vulcanization is preferably not greater than 0.6 mm. In addition, preferably, angles formed by the cords at the tread portion and a straight line parallel to the tire circumferential direction are each not less than 10° and not greater than 35°, and the cords of the belt layers adjacent to each other are arranged so as to intersect each other.

The angle of the steel cords is an angle of the steel cords with respect to the tire circumferential direction in a state where the tire is not filled with air, and can be confirmed by peeling the tread portion from the tire on the radially outer side.

Thereafter, a tire is obtained by heating and pressurizing the produced unvulcanized tire in a vulcanizing machine. The vulcanization step can be carried out by applying known vulcanization means. The vulcanization temperature is, for example, higher than 120°C and lower than 200°C, and the vulcanization time is, for example, longer than 5 minutes and shorter than 15 minutes.

At this time, the tire is shaped into a shape that satisfies the above (Expression 1) when the tire is fitted on the normal rim and the internal pressure of the tire is set to 250 kPa.

Examples of specific tires to which the present disclosure is preferably applied include tires having a size designation such as 145/60R18, 145/60R19, 155/55R18, 155/55R19, 155/70R17, 155/70R19, 165/55R20, 165/55R21, 165/60R19, 165/65R19, 165/70R18, 175/55R19, 175/55R20, 175/55R22, 175/60R18, 185/55R19, 185/60R20, 195/50R20, and 195/55R20.

The present embodiment can be used for various tires classified into tires for a passenger car, tires for a truck and a bus, tires for a motorcycle, etc., is preferably applied to tires for a passenger car, that is, tires that are mounted on a car running on four wheels and that has a maximum load capacity of not greater than 1000 kg, among tires that can satisfy (Expression 1), and can more preferably contribute to solving the problem in the present disclosure of providing a pneumatic tire having excellent ride comfort and steering stability during high speed running, by satisfying (Expression 1).

The above-described maximum load capacity refers to a maximum load capacity that is defined, in a standard system including a standard on which the tire is based, by the standard for each tire, for example, a maximum load capacity based on a load index (LI) in the JATMA standard (standard of the Japan Automobile Tyre Manufacturers Association, Inc.), the maximum value described in "TIRE LOAD LIMITS AT VARIOUS COLD INFLATION PRESSURES" in the TRA

(The Tire and Rim Association, Inc.), and the "LOAD CAPACITY" in the ETRTO.

In the case of a tire that is not specified in these standards, a maximum load capacity WL (kg) is calculated using the following two equations on the basis of a tire cross-sectional width Wt (mm), a tire cross-sectional height Ht (mm), and a tire outer diameter Dt (mm) in a state where the tire is fitted on the normal rim, the internal pressure of the tire is set to 250 kPa, and no load is applied to the tire. V denotes the volume of the space occupied by the tire (virtual volume), and (Dt/2-Ht) denotes a rim diameter (mm).

$$V\ (mm^3) = \{(Dt/2)^2 - (Dt/2-Ht)^2\} \times \pi \times Wt$$

$$WL\ (kg) = 0.000011 \times V + 175$$

If the above-described maximum load capacity is not greater than 1000 kg, the maximum load capacity is not particularly limited. However, generally, as the maximum load capacity increases, the tire weight tends to increase and the impact transmitted to the tire also tends to increase. Thus, the maximum load capacity is preferably not greater than 900 kg, more preferably not greater than 800 kg, and further preferably not greater than 700 kg.

Here, from the viewpoint of softening the impact transmitted to the tire, the tire weight is preferably not greater than 20 kg, more preferably not greater than 15 kg, and further preferably not greater than 12 kg, not greater than 10 kg, and not greater than 8 kg. The tire weight herein is the weight of the entire tire, and in the case where the tire is provided with a sealant, a sponge, a three-dimensional network structure, an electronic component, etc., on the tire inner cavity surface, the tire weight is a weight including the weights of these components. In addition, the tire weight can be adjusted as appropriate on the basis of the thickness and the width of each member included in the tire, the specific gravity of the rubber composition, the number of steel cords arranged in the belt reinforcing layer, the configuration of a bead wire, etc.

## EXAMPLES

Hereinafter, the present invention will be further specifically described by means of examples. In the examples, tires having a tire size of 185/60R16 were produced and evaluated (outer diameter Dt: 633.2 mm, cross-sectional width Wt: 189 mm, $(Dt^2 \times \pi/4)/Wt$: 1666.1).

### 1. Production of Belt Rubber Composition

First, a belt rubber composition was produced.

### (1) Blending Materials

First, each blending material described below was prepared.

(a) Rubber Component
NR: RSS3
(b) Blending Materials Other Than Rubber Component

(I) Carbon black-1: SHOBLACK N660 manufactured by Cabot Japan K.K. (BET specific surface area: 35 $m^2/g$, average particle diameter: 40 nm)
(II) Carbon black-2: SHOBLACK N326 manufactured by Cabot Japan K.K. (BET specific surface area: 78 $m^2/g$, average particle diameter: 30 nm)
(III) Oil: Diana Process AH-24 (aromatic oil) manufactured by Idemitsu Kosan Co., Ltd.
(IV) Curable resin-1: PR12686 manufactured by Sumitomo Bakelite Co., Ltd. (cashew oil-modified phenol resin)
(V) Curable resin-2: SUMIKANOL 507AP manufactured by Taoka Chemical Co., Ltd.
(modified etherified methylol melamine resin)
(VI) Organic acid cobalt salt-1: COST-F manufactured by DIC Corporation
(cobalt stearate, cobalt content: 9.5% by mass)
(VII) Organic acid cobalt salt-2: DICNATE NBC-II manufactured by DIC Corporation
(cobalt boron neodecanoate, cobalt content: 22.5% by mass)
(VIII) Organic acid cobalt salt-3: cobalt acetylacetonate manufactured by Tokyo Chemical Industry Co., Ltd.
(cobalt acetylacetonate, cobalt content: 16.5% by mass)
(IX) Antioxidant: ANTAGE RD manufactured by Kawaguchi Chemical Industry Co., Ltd.
(2,2,4-trimethyl-1,2-dihydroquinoline)

(X) HTS: DURALINK HTS manufactured by Flexsys
(hexamethylene-1,6-bis(thiosulfate) disodium salt dihydrate)
(XI) Zinc oxide: Zinc Oxide Type-1 manufactured by Mitsui Mining & Smelting Co., Ltd.
(XII) Sulfur: powdery sulfur manufactured by Tsurumi Chemical Industry Co., Ltd.
(XIII) Vulcanization accelerator: NOCCELER DZ manufactured by Ouchi Shinko Chemical Industrial Co., Ltd.
(N,N-dicyclohexyl-2-benzothiazolyl sulfenamide)

(2) Production of Rubber Composition

A kneaded product was obtained by kneading the materials other than the sulfur and the vulcanization accelerators under a condition of 150°C for 5 minutes by using a Banbury mixer in accordance with each of blending formulas shown in Table 1. The unit of each blending amount is parts by mass.

Next, the sulfur and the vulcanization accelerators were added to the obtained kneaded product, and the mixture was kneaded under a condition of 80°C for 5 minutes by using an open roll, to obtain a belt rubber composition.

2. Production of Tire

First, steel cords (with brass plating on the surface) having a configuration and an outer diameter shown in Table 1 were arranged at ends (cords/5 cm) shown in Table 1, and then both sides thereof were covered with the previously obtained belt rubber composition to produce a belt member. At this time, the same amount of the rubber was topped on each of the upper and lower sides of the belt member such that the steel cords were arranged at the center in the thickness direction of the belt member, and the thickness was adjusted as appropriate such that the average distance between the steel cords in a pair of belt layers was 0.45 mm in a tire after vulcanization. In Example 7, prior to topping, an adhesive composition containing a polybenzoxazine compound was applied to the surface of each steel cord to form a coating layer.

Thereafter, the two layers were attached together with other tire members such that an angle formed by the steel cords in the belt member and a straight line parallel to the tire circumferential direction was 28°, to form an unvulcanized tire, and the unvulcanized tire was press-vulcanized under a condition of 170°C for 10 minutes to produce each test tire shown in Table 1 (Example 1 to Example 7 and Comparative Example 1 to Comparative Example 3). The tread portion rubber gauge G in each test tire was set to a thickness (mm) shown in Table 1.

In each test tire, the above-described ($L_{80}/L_0$) was set to 0.5, the total of the cross-sectional areas of the circumferential grooves was set to 22% of the cross-sectional area of the tread portion, and the total of the volumes of the lateral grooves was set to 3.5% of the volume of the tread portion.

3. Calculation of Parameters

Thereafter, the rubber composition was cut out from between the belt layers of each test tire to prepare a rubber test piece for viscoelasticity measurement having a length of 40 mm and a width of 4 mm, and a complex elastic modulus E* was measured using EPLEXOR series manufactured by NETZSCH-Gerätebau GmbH, under conditions of temperature: 70°C, initial strain: 5%, dynamic strain: ±1%, frequency: 10 Hz, and deformation mode: stretch. The results are shown in Table 1.

Then, "$e \div G \times E^*$" and "$e \times A$" were calculated. The results are shown in Table 1.

4. Performance Evaluation Tests

(1) Evaluation of Steering Stability

The respective test tires were mounted to all the wheels of vehicles (front wheel drive vehicles produced in Japan and having an engine displacement of 2000 cc), and filled with air such that the internal pressures of the tires were 250 kPa. Then, each vehicle was caused to run in a zigzag at a speed of 100 km/h on a test course having a dry road surface, and for steering stability at that time, 20 drivers made sensory evaluation on a 5 point scale (the higher the value, the more stable the steering). The total score of the scores by the 20 drivers was calculated.

Next, the total score was indexed based on the following equation with the result of Comparative Example 1 being regarded as 100, to evaluate steering stability. A higher value indicates that the steering stability during high speed running is better.

$$\text{Steering stability} = [(\text{result of test tire})/(\text{result of Comparative Example 1})] \times 100$$

(2) Evaluation of Ride Comfort

The respective test tires were mounted to all the wheels of vehicles (front wheel drive vehicles produced in Japan and having an engine displacement of 2000 cc), and filled with air such that the internal pressures of the tires were 250 kPa. Then, each vehicle was caused to run at a speed of 100 km/h on a test course having a dry road surface and repeat sudden starts and sudden stops in a straight line, and for ride comfort at that time, 20 drivers made sensory evaluation on a 5 point scale (the higher the value, the better the ride comfort). The total score of the scores by the 20 drivers was calculated.

Next, the total score was indexed based on the following equation with the result of Comparative Example 1 being regarded as 100, to evaluate ride comfort. A higher value indicates that the ride comfort during high speed running is better.

$$\text{Ride comfort} = [(\text{result of test tire})/(\text{result of Comparative Example 1})]\times 100$$

(3) Evaluation Results

The results of each evaluation are shown in Table 1. In Table 1, for configuration of cords, "1×1" indicates a monofilament cord, and "1×2" indicates a twisted cord obtained by twisting two filaments together.

[Table 1]

| | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 |
|---|---|---|---|---|---|---|---|---|---|---|
| (Blending formula) | | | | | | | | | | |
| NR | 100 | 100 | 100 | 100 | 100 | 100 | 100 | 100 | 100 | 100 |
| Carbon black-1 | 30 | 30 | - | 60 | 30 | - | 30 | 60 | 30 | - |
| Carbon black-2 | 30 | 30 | 60 | - | 30 | 60 | 30 | - | 30 | 60 |
| Oil | 2 | 2 | 2 | 2 | 2 | 2 | 2 | 2 | 2 | 2 |
| Curable resin-1 | - | - | - | 3 | 3 | 3 | 3 | - | - | - |
| Organic acid cobalt salt-1 | - | - | - | 1.5 | - | - | - | 1.5 | - | 1.5 |
| Organic acid cobalt salt-2 | 1.5 | 1.5 | 1.5 | - | - | - | 1.5 | - | 1.5 | - |
| Organic acid cobalt salt-3 | - | - | - | - | 0.8 | 0.8 | - | - | - | - |
| Antioxidant | 1 | 1 | 1 | 1 | 1 | 1 | 1 | 1 | 1 | 1 |
| HTS | 1 | 1 | 1 | 1 | 1 | 1 | 1 | 1 | 1 | 1 |
| Zinc oxide | 10 | 10 | 10 | 10 | 10 | 3 | 10 | 10 | 10 | 10 |
| Sulfur | 6 | 6 | 6 | 6 | 6 | 2 | 6 | 6 | 6 | 6 |
| Vulcanization accelerator | 1 | 1 | 1 | 1 | 1 | 1 | 1 | 1 | 1 | 1 |
| Curable resin-2 | - | - | - | 1.5 | 1.5 | 1.5 | 1.5 | - | - | - |
| (Cord) | | | | | | | | | | |
| Configuration | 1×1 | 1×1 | 1×1 | 1×1 | 1×1 | 1×1 | 1×1 | 1×2 | 1×1 | 1×2 |
| Cord outer diameter (mm) | 0.29 | 0.29 | 0.29 | 0.29 | 0.29 | 0.29 | 0.29 | 0.59 | 0.29 | 0.59 |
| Ends e (cords/5 cm) | 70 | 75 | 80 | 70 | 70 | 70 | 70 | 45 | 45 | 70 |
| Adhesive layer | Absence | Absence | Absence | Absence | Absence | Absence | Presence | Absence | Absence | Absence |
| (Tread portion) | | | | | | | | | | |
| Rubber gauge (mm) | 9 | 9 | 9.5 | 9 | 8.5 | 9 | 9 | 8.5 | 8.5 | 9.5 |
| (Parameter) | | | | | | | | | | |
| $E^*$ (MPa) at 70°C | 9 | 9 | 12 | 9 | 12 | 9 | 12 | 6 | 9 | 12 |
| $e \div G \times E^*$ | 70 | 75 | 101 | 70 | 99 | 70 | 93 | 32 | 48 | 88 |
| $e \times A$ | 4.6 | 5.0 | 5.3 | 4.6 | 4.6 | 4.6 | 4.6 | 12.3 | 3.0 | 19.1 |

(continued)

| (Evaluation results) | | | | | | | | | | |
|---|---|---|---|---|---|---|---|---|---|---|
| Steering stability | 106 | 108 | 110 | 106 | 110 | 106 | 108 | 100 | 100 | 102 |
| Ride comfort | 104 | 104 | 106 | 106 | 102 | 104 | 106 | 100 | 98 | 102 |

From the results shown in Table 1, it is found that when the steel monofilament cords are covered with the rubber composition to form a belt layer and $e \div G \times E^* \geq 70$ is satisfied, it is possible to provide a pneumatic tire having excellent ride comfort and steering stability during high speed running.

It is also found that when each of (Expression 2) to (Expression 5) described later is satisfied, or when the angle and the outer diameters of the cords, the average distance D between the steel cords, etc., are appropriately controlled, it is possible to provide a pneumatic tire having excellent ride comfort and steering stability during high speed running.

A present disclosure (1) is a pneumatic tire including a tread portion and a belt layer, wherein

the belt layer includes reinforcing cords made of a steel monofilament and covered with a rubber composition, and the number e of the reinforcing cords arranged (cords) per 5 cm in a tire width direction, a thickness G (mm) of the tread portion, and a complex elastic modulus E* (MPa) measured for the rubber composition under conditions of temperature: 70°C, initial strain: 5%, dynamic strain: ±1%, frequency: 10 Hz, and deformation mode: stretch, satisfy the following (Expression 1),

$$e \div G \times E^* \geq 70 \quad \text{(Expression 1)}.$$

A present disclosure (2) is the pneumatic tire described in the present disclosure (1), wherein the following (Expression 2) is satisfied,

$$e \div G \times E^* \geq 75 \quad \text{(Expression 2)}.$$

A present disclosure (3) is the pneumatic tire described in the present disclosure (2), wherein the following (Expression 3) is satisfied,

$$e \div G \times E^* \geq 80 \quad \text{(Expression 3)}.$$

A present disclosure (4) is the pneumatic tire of any combination with any one of the present disclosures (1) to (3), wherein the rubber composition contains 80 parts by mass or greater and 100 parts by mass or less of an isoprene-based rubber (IR) in 100 parts by mass of a rubber component, and contains 5 parts by mass or greater and 80 parts by mass or less of carbon black and 0.1 parts by mass or greater and 5 parts by mass or less of an organic acid cobalt salt per 100 parts by mass of the rubber component.

A present disclosure (5) is the pneumatic tire described in the present disclosure (4), wherein the carbon black is carbon black having a BET specific surface area of not greater than 45$m^2$/g, and is contained in an amount of not less than 5 parts by mass and not greater than 60 parts by mass per 100 parts by mass of the rubber component.

A present disclosure (6) is the pneumatic tire described in the present disclosure (4) or (5), wherein the organic acid cobalt salt is a cobalt salt of acetylacetonic acid, fumaric acid, pentanoic acid, acetic acid, benzoic acid, or a derivative thereof.

A present disclosure (7) is the pneumatic tire of any combination with any one of the present disclosures (4) to (6), wherein the organic acid cobalt salt is a cobalt salt of a boron-containing organic acid.

A present disclosure (8) is the pneumatic tire of any combination with any one of the present disclosures (4) to (7), wherein the rubber composition contains a phenol resin and/or a melamine resin.

A present disclosure (9) is the pneumatic tire of any combination with any one of the present disclosures (4) to (8), wherein the rubber composition contains 0.1 parts by mass or greater and 5 parts by mass or less of an aliphatic (thiosulfate) sodium salt derivative per 100 parts by mass of the rubber component.

A present disclosure (10) is the pneumatic tire of any combination with any one of the present disclosures (1) to (9), wherein an adhesive layer is provided between each reinforcing cord and the rubber composition.

A present disclosure (11) is the pneumatic tire described in the present disclosure (10), wherein the adhesive layer is formed so as to contain a polybenzoxazine compound containing a unit represented by the following (Chem. 1) or (Chem. 2).

[Chem. 9]

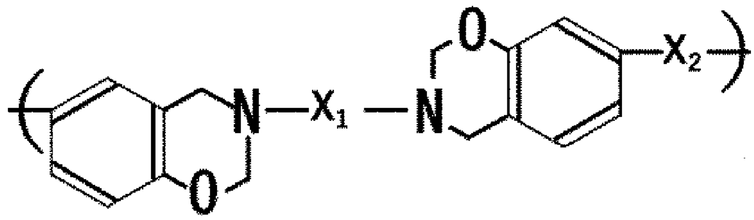

(Chem. 1)

[Chem. 10]

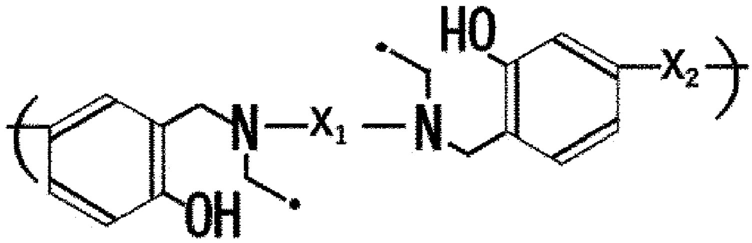

(Chem. 2)

$X_1$ is a hydrocarbon selected from aliphatic, alicyclic, and aromatic hydrocarbons, or a combination thereof, and optionally has a structure in which any of S, O, N, and P heteroatoms or these heteroatoms are continuously connected.

$X_2$ has an (S)n structure in which n (1 to 8) S atoms are connected, and optionally has a hydrocarbon selected from aliphatic, alicyclic, and aromatic hydrocarbons, and any of S, O, N, and P and/or a combination thereof.

A present disclosure (12) is the pneumatic tire described in the present disclosure (10), wherein the adhesive layer is formed so as to contain a polybenzoxazine compound containing a unit represented by the following (Chem. 3) or (Chem. 4).

[Chem. 11]

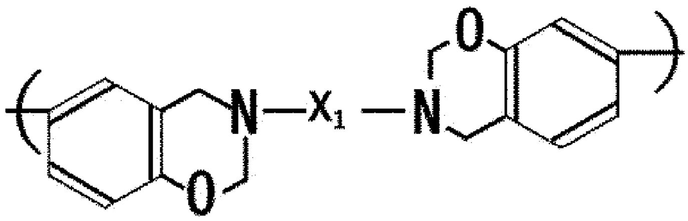

(Chem. 3)

[Chem. 12]

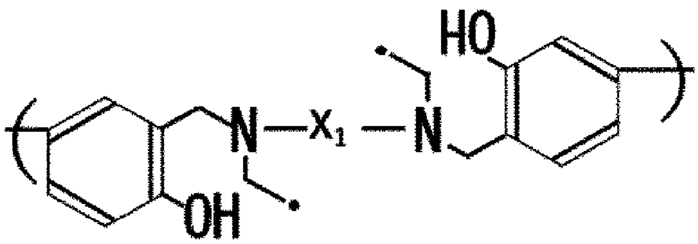

(Chem. 4)

$X_1$ is a hydrocarbon selected from aliphatic, alicyclic, and aromatic hydrocarbons, or a combination thereof, and has an (S)n structure in which n (1 to 8) S atoms are connected.

A present disclosure (13) is the pneumatic tire of any combination with any one of the present disclosures (1) to (12), wherein the number e (cords/5 cm) of the reinforcing cords arranged and a cross-sectional area A ($mm^2$) of each reinforcing cord satisfy the following (Expression 4),

$$e \times A > 4.0 \quad \text{(Expression 4)}.$$

A present disclosure (14) is the pneumatic tire of any combination with any one of the present disclosures (1) to (13), wherein an angle formed by the reinforcing cords and a straight line parallel to a tire circumferential direction is not less than 10° and not greater than 35°.

A present disclosure (15) is the pneumatic tire of any combination with any one of the present disclosures (1) to (14), wherein an outer diameter r (mm) of each reinforcing cord is not less than 0.1 mm and not greater than 0.5 mm.

A present disclosure (16) is the pneumatic tire of any combination with any one of the present disclosures (1) to (15), wherein

at least two layers are provided as the belt layer, and
at least a pair of belt layers adjacent to each other in a tire radial direction are arranged with a distance of not less than 0.1 mm and not greater than 0.8 mm therebetween.

A present disclosure (17) is the pneumatic tire of any combination with any one of the present disclosures (1) to (16), wherein when a cross-sectional width and an outer diameter of the tire when the tire is fitted on a normal rim and an internal pressure of the tire is set to 250 kPa are denoted by Wt (mm) and Dt (mm), respectively, the following (Expression 5) is satisfied,

$$1650 \leq (Dt^2 \times \pi/4)/Wt \quad \text{(Expression 5)}.$$

A present disclosure (18) is the pneumatic tire of any combination with any one of the present disclosures (1) to (17), wherein

the tread portion has a plurality of circumferential grooves continuously extending in the tire circumferential direction, and
a total of cross-sectional areas of the plurality of circumferential grooves is not less than 10% and not greater than 30% of a cross-sectional area of the tread portion.

A present disclosure (19) is the pneumatic tire of any combination with any one of the present disclosures (1) to (18), wherein

the tread portion has a plurality of circumferential grooves continuously extending in the tire circumferential direction, and
a ratio ($L_{80}/L_0$) of a groove width $L_{80}$ at a depth, which is 80% of a maximum depth of the circumferential groove, to a groove width $L_0$ of the circumferential groove at a ground-contact surface of the tread portion is not less than 0.3 and not greater than 0.7.

A present disclosure (20) is the pneumatic tire of any combination with any one of the present disclosures (1) to (19), wherein

the tread portion further has a plurality of lateral grooves extending in a tire axial direction, and
a total of volumes of the plurality of lateral grooves is not less than 2.0% and not greater than 5.0% of a volume of the tread portion.

## Claims

**1.** A pneumatic tire comprising a tread portion and a belt layer, wherein

the belt layer includes reinforcing cords made of a steel monofilament and covered with a rubber composition, and
the number e of the reinforcing cords arranged (cords) per 5 cm in a tire width direction, a thickness G (mm) of the tread portion, and a complex elastic modulus E* (MPa) measured for the rubber composition under conditions of temperature: 70°C, initial strain: 5%, dynamic strain: ±1%, frequency: 10 Hz, and deformation mode: stretch, satisfy the following (Expression 1),

$$e \div G \times E^{*} \geq 70 \quad \text{(Expression 1).}$$

**2.** The pneumatic tire according to claim 1, wherein the following (Expression 2) is satisfied,

$$e \div G \times E^{*} \geq 75 \quad \text{(Expression 2).}$$

**3.** The pneumatic tire according to claim 2, wherein the following (Expression 3) is satisfied,

$$e \div G \times E^{*} \geq 80 \quad \text{(Expression 3).}$$

**4.** The pneumatic tire according to any one of claims 1 to 3, wherein the rubber composition contains 80 parts by mass or greater and 100 parts by mass or less of an isoprene-based rubber (IR) in 100 parts by mass of a rubber component, and contains 5 parts by mass or greater and 80 parts by mass or less of carbon black and 0.1 parts by mass or greater and 5 parts by mass or less of an organic acid cobalt salt per 100 parts by mass of the rubber component.

**5.** The pneumatic tire according to claim 4, wherein the carbon black is carbon black having a BET specific surface area of not greater than $45 m^2/g$, as measured according to ASTM D3037-93, and is contained in an amount of not less than 5 parts by mass and not greater than 60 parts by mass per 100 parts by mass of the rubber component.

**6.** The pneumatic tire according to claim 4 or 5, wherein the organic acid cobalt salt is a cobalt salt of acetylacetonic acid, fumaric acid, pentanoic acid, acetic acid, benzoic acid, or a derivative thereof.

**7.** The pneumatic tire according to any one of claims 4 to 6, wherein the organic acid cobalt salt is a cobalt salt of a boron-containing organic acid.

**8.** The pneumatic tire according to any one of claims 4 to 7, wherein the rubber composition contains a phenol resin and/or a melamine resin.

**9.** The pneumatic tire according to any one of claims 4 to 8, wherein the rubber composition contains 0.1 parts by mass or greater and 5 parts by mass or less of an aliphatic (thiosulfate) sodium salt derivative per 100 parts by mass of the rubber component.

**10.** The pneumatic tire according to any one of claims 1 to 9, wherein an adhesive layer is provided between each reinforcing cord and the rubber composition.

**11.** The pneumatic tire according to claim 10, wherein the adhesive layer is formed so as to contain a polybenzoxazine compound containing a unit represented by the following (Chem. 1) or (Chem. 2),

[Chem. 1]

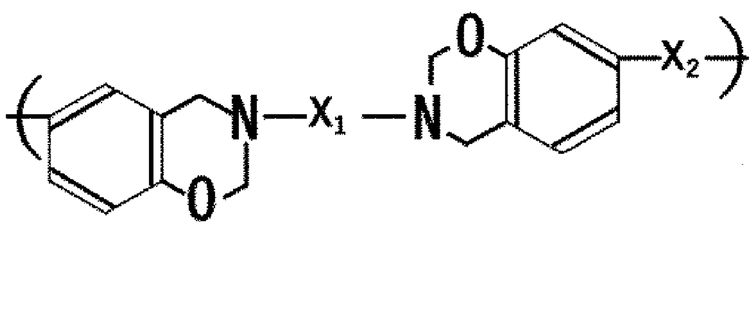

(Chem. 1)

[Chem. 2]

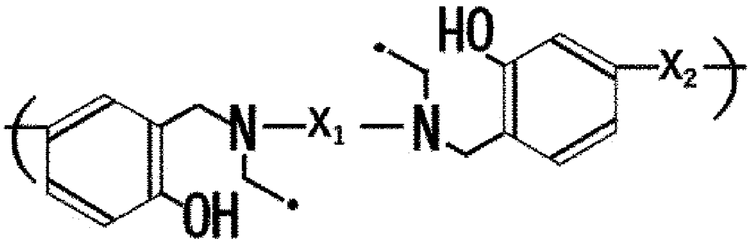

(Chem. 2)

wherein

$X_1$ is a hydrocarbon selected from aliphatic, alicyclic, and aromatic hydrocarbons, or a combination thereof, and optionally has a structure in which any of S, O, N, and P heteroatoms or these heteroatoms are continuously connected, and

$X_2$ has an (S)n structure in which n (1 to 8) S atoms are connected, and optionally has a hydrocarbon selected from aliphatic, alicyclic, and aromatic hydrocarbons, and any of S, O, N, and P and/or a combination thereof.

**12.** The pneumatic tire according to claim 10, wherein the adhesive layer is formed so as to contain a polybenzoxazine compound containing a unit represented by the following (Chem. 3) or (Chem. 4),

[Chem. 3]

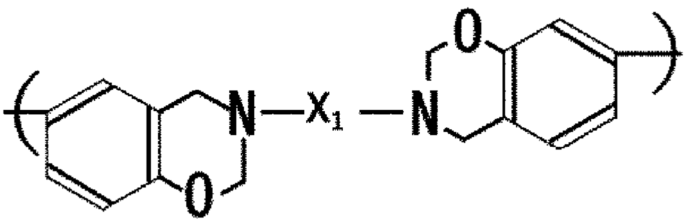

(Chem. 3)

[Chem. 4]

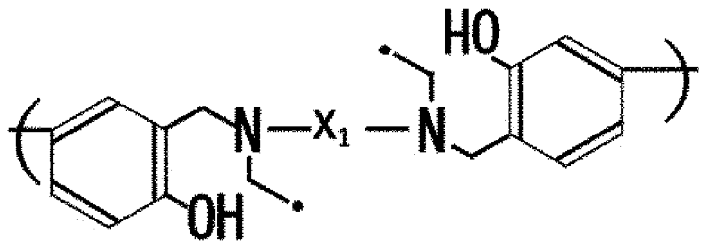

(Chem. 4)

wherein
$X_1$ is a hydrocarbon selected from aliphatic, alicyclic, and aromatic hydrocarbons, or a combination thereof, and has an (S)n structure in which n (1 to 8) S atoms are connected.

**13.** The pneumatic tire according to any one of claims 1 to 12, wherein the number e (cords/5 cm) of the reinforcing cords arranged and a cross-sectional area A ($mm^2$) of each reinforcing cord satisfy the following (Expression 4),

$$e \times A > 4.0 \qquad \text{(Expression 4)}.$$

**14.** The pneumatic tire according to any one of claims 1 to 13, wherein an angle formed by the reinforcing cords and a straight line parallel to a tire circumferential direction is not less than 10° and not greater than 35°.

**15.** The pneumatic tire according to any one of claims 1 to 14, wherein an outer diameter r (mm) of each reinforcing cord is not less than 0.1 mm and not greater than 0.5 mm.

**16.** The pneumatic tire according to any one of claims 1 to 15, wherein

at least two layers are provided as the belt layer, and
at least a pair of belt layers adjacent to each other in a tire radial direction are arranged with a distance of not less than 0.1 mm and not greater than 0.8 mm therebetween.

**17.** The pneumatic tire according to any one of claims 1 to 16, wherein when a cross-sectional width and an outer diameter of the tire when the tire is fitted on a normal rim and an internal pressure of the tire is set to 250 kPa are denoted by Wt (mm) and Dt (mm), respectively, the following (Expression 5) is satisfied,

$$1650 \leq (Dt^2 \times \pi/4)/Wt \qquad \text{(Expression 5)}.$$

**18.** The pneumatic tire according to any one of claims 1 to 17, wherein

the tread portion has a plurality of circumferential grooves continuously extending in the tire circumferential direction, and
a total of cross-sectional areas of the plurality of circumferential grooves is not less than 10% and not greater than 30% of a cross-sectional area of the tread portion.

**19.** The pneumatic tire according to any one of claims 1 to 18, wherein

the tread portion has a plurality of circumferential grooves continuously extending in the tire circumferential direction, and
a ratio ($L_{80}/L_0$) of a groove width $L_{80}$ at a depth, which is 80% of a maximum depth of the circumferential groove, to a groove width $L_0$ of the circumferential groove at a ground-contact surface of the tread portion is not less than 0.3 and not greater than 0.7.

**20.** The pneumatic tire according to any one of claims 1 to 19, wherein

the tread portion further has a plurality of lateral grooves extending in a tire axial direction, and
a total of volumes of the plurality of lateral grooves is not less than 2.0% and not greater than 5.0% of a volume of the tread portion.

**Patentansprüche**

**1.** Luftreifen, umfassend einen Laufstreifenabschnitt und eine Gürtelschicht, wobei

die Gürtelschicht Verstärkungskorde umfasst, die aus einem Stahl-Monofilament hergestellt und mit einer Kautschukzusammensetzung bedeckt sind, und
die Anzahl e der pro 5 cm in einer Reifenbreitenrichtung angeordneten Verstärkungskorde (Korde), eine Dicke G (mm) des Laufstreifenabschnitts und ein komplexer Elastizitätsmodul E* (MPa), gemessen für die Kautschukzusammensetzung unter Bedingungen von Temperatur: 70°C, anfänglicher Dehnung: 5%, dynamischer Dehnung:
±1 %, Frequenz: 10 Hz und Verformungsmodus: Streckung, den folgenden (Ausdruck 1) erfüllen,

$$e \div G \times E^* \geq 70 \qquad \text{(Ausdruck 1)}.$$

**2.** Luftreifen nach Anspruch 1, wobei der folgende (Ausdruck 2) erfüllt ist,

$$e \div G \times E^* \geq 75 \qquad \text{(Ausdruck 2)}.$$

**3.** Luftreifen nach Anspruch 2, wobei der folgende (Ausdruck 3) erfüllt ist,

$$e \div G \times E^* \geq 80 \qquad \text{(Ausdruck 3).}$$

**4.** Luftreifen nach einem der Ansprüche 1 bis 3, wobei die Kautschukzusammensetzung 80 Massenteile oder mehr und 100 Massenteile oder weniger eines Isopren-basierten Kautschuks (IR) in 100 Massenteilen einer Kautschukkomponente enthält, und 5 Massenteile oder mehr und 80 Massenteile oder weniger an Ruß und 0,1 Massenteile oder mehr und 5 Massenteile oder weniger eines Kobaltsalzes einer organischen Säure pro 100 Massenteile der Kautschukkomponente enthält.

**5.** Luftreifen nach Anspruch 4, wobei der Ruß eine spezifische BET-Oberfläche von nicht mehr als 45 $m^2/g$ aufweisender Ruß ist, gemessen gemäß ASTM D3037-93, und in einer Menge von nicht weniger als 5 Massenteilen und nicht mehr als 60 Massenteilen pro 100 Massenteilen der Kautschukkomponente enthalten ist.

**6.** Luftreifen nach Anspruch 4 oder 5, wobei das Kobaltsalz einer organischen Säure ein Kobaltsalz von Acetylaceton-Säure, Fumarsäure, Pentansäure, Essigsäure, Benzoesäure oder eines Derivats davon ist.

**7.** Luftreifen nach einem der Ansprüche 4 bis 6, wobei das Kobaltsalz einer organischen Säure ein Kobaltsalz einer Borhaltigen organischen Säure ist.

**8.** Luftreifen nach einem der Ansprüche 4 bis 7, wobei die Kautschukzusammensetzung ein Phenolharz und/oder ein Melaminharz enthält.

**9.** Luftreifen nach einem der Ansprüche 4 bis 8, wobei die Kautschukzusammensetzung 0,1 Massenteile oder mehr und 5 Massenteile oder weniger eines aliphatischen (Thiosulfat-)Natriumsalzderivats pro 100 Massenteile der Kautschukkomponente enthält.

**10.** Luftreifen nach einem der Ansprüche 1 bis 9, wobei eine Klebstoffschicht zwischen jedem Verstärkungskord und der Kautschukzusammensetzung vorgesehen ist.

**11.** Luftreifen nach Anspruch 10, wobei die Klebstoffschicht so ausgebildet ist, dass sie eine Polybenzoxazin-Verbindung enthält, die eine durch die folgende (Chem. 1) oder (Chem. 2) dargestellte Einheit enthält,

[Chem. 1]

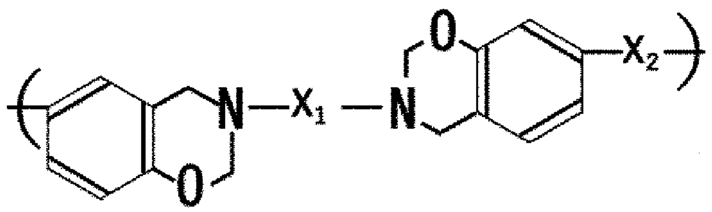

(Chem. 1)

[Chem. 2]

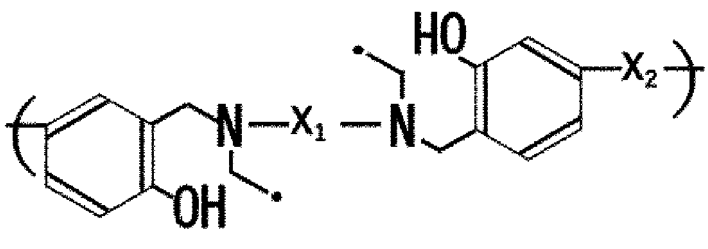

(Chem. 2)

wobei

$X_1$ ein Kohlenwasserstoff ist, welcher ausgewählt ist aus aliphatischen, alizyklischen und aromatischen Kohlenwasserstoffen oder einer Kombination davon, und optional eine Struktur aufweist, in der beliebige von S-, O-, N- und P-Heteroatomen oder diese Heteroatome kontinuierlich verbunden sind, und

$X_2$ eine (S)n-Struktur aufweist, in der n (1 bis 8) S-Atome verbunden sind, und optional einen Kohlenwasserstoff, der aus aliphatischen, alizyklischen und aromatischen Kohlenwasserstoffen ausgewählt ist, und beliebige von S, O, N und P und/oder eine Kombination davon aufweist.

**12.** Luftreifen nach Anspruch 10, wobei die Klebstoffschicht so ausgebildet ist, dass sie eine Polybenzoxazin-Verbindung enthält, die eine durch die folgende (Chem. 3) oder (Chem. 4) dargestellte Einheit enthält,

[Chem. 3]

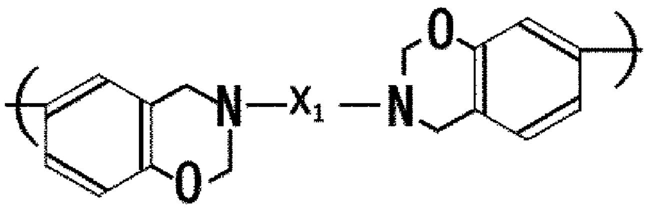

(Chem. 3)

[Chem. 4]

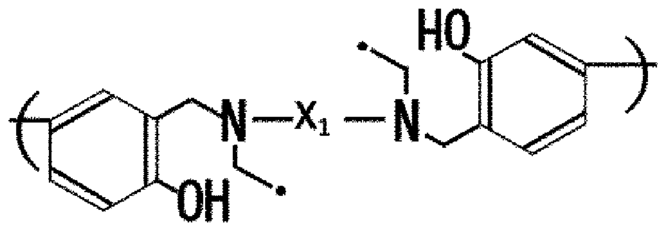

(Chem. 4)

wobei
$X_1$ ein Kohlenwasserstoff ist, welcher ausgewählt ist aus aliphatischen, alizyklischen und aromatischen Kohlenwasserstoffen oder einer Kombination davon, und eine (S)n-Struktur aufweist, in der n (1 bis 8) S-Atome verbunden sind.

**13.** Luftreifen nach einem der Ansprüche 1 bis 12, wobei die Anzahl e (Korde/5 cm) der angeordneten Verstärkungskorde und eine Querschnittsfläche A ($mm^2$) jedes Verstärkungskords den folgenden (Ausdruck 4) erfüllen,

$$e \times A > 4{,}0 \qquad \text{(Ausdruck 4).}$$

**14.** Luftreifen nach einem der Ansprüche 1 bis 13, wobei ein Winkel, welcher durch die Verstärkungskorde und eine zur Reifenumfangsrichtung parallele Gerade gebildet ist, nicht weniger als 10° und nicht mehr als 35° beträgt.

**15.** Luftreifen nach einem der Ansprüche 1 bis 14, wobei ein Außendurchmesser r (mm) jedes Verstärkungskords nicht weniger als 0,1 mm und nicht mehr als 0,5 mm beträgt.

**16.** Luftreifen nach einem der Ansprüche 1 bis 15, wobei

mindestens zwei Schichten als die Gürtelschicht vorgesehen sind, und
mindestens ein Paar von Gürtelschichten, die in einer Reifenradialrichtung zueinander benachbart sind, mit einem Abstand von nicht weniger als 0,1 mm und nicht mehr als 0,8 mm dazwischen angeordnet sind.

**17.** Luftreifen nach einem der Ansprüche 1 bis 16, wobei, wenn eine Querschnittsbreite und ein Außendurchmesser des Reifens, wenn der Reifen auf eine normale Felge aufgezogen ist und ein Innendruck des Reifens auf 250 kPa eingestellt ist, durch Wt (mm) beziehungsweise Dt (mm) bezeichnet sind, der folgende (Ausdruck 5) erfüllt ist,

$$1650 \leq (Dt^2 \times \pi/4)/Wt \qquad \text{(Ausdruck 5).}$$

**18.** Luftreifen nach einem der Ansprüche 1 bis 17, wobei

der Laufstreifenabschnitt eine Mehrzahl an Umfangsrillen aufweist, die sich durchgehend in der Reifenumfangsrichtung erstrecken, und
eine Gesamtsumme von Querschnittsflächen der Mehrzahl an Umfangsrillen nicht weniger als 10% und nicht mehr als 30% einer Querschnittsfläche des Laufstreifenabschnitts beträgt.

**19.** Luftreifen nach einem der Ansprüche 1 bis 18, wobei

der Laufstreifenabschnitt eine Mehrzahl an Umfangsrillen aufweist, die sich durchgehend in der Reifenumfangsrichtung erstrecken, und
ein Verhältnis ($L_{80}/L_0$) einer Rillenbreite $L_{80}$ bei einer Tiefe, die 80% einer maximalen Tiefe der Umfangsrille beträgt, zu einer Rillenbreite $L_0$ der Umfangsrille an einer Bodenkontakt-Oberfläche des Laufstreifenabschnitts nicht weniger als 0,3 und nicht mehr als 0,7 beträgt.

**20.** Luftreifen nach einem der Ansprüche 1 bis 19, wobei

der Laufstreifenabschnitt zudem eine Mehrzahl an Querrillen aufweist, die sich in einer Reifenaxialrichtung erstrecken, und
eine Gesamtsumme von Volumina der Mehrzahl an Querrillen nicht weniger als 2,0% und nicht mehr als 5,0% eines Volumens des Laufstreifenabschnitts beträgt.

**Revendications**

**1.** Pneumatique comprenant une partie bande de roulement et une couche de ceinture, dans lequel

la couche de ceinture comporte des câbles de renforcement fabriqués dans un mono filament d'acier et recouverts d'une composition de caoutchouc, et
le nombre e de câbles de renforcement (câbles) rangés par 5 cm dans une direction de largeur de pneu, une épaisseur G (mm) de la partie bande de roulement et un module élastique complexe E* (MPa) mesuré pour la composition de caoutchouc dans des conditions de température : 70 °C, de contrainte initiale : 5 %, de contrainte dynamique : ±1 %, de fréquence : 10 Hz, et en mode de déformation : traction, satisfont ce qui suit (Expression 1),

$$e \div G \times E^* \geq 70 \text{ (Expression 1)}.$$

**2.** Pneumatique selon la revendication 1, dans lequel ce qui suit (Expression 2) est satisfait,

$$e \div G \times E^* \geq 75 \text{ (Expression 2)}.$$

**3.** Pneumatique selon la revendication 2, dans lequel ce qui suit (Expression 3) est satisfait

$$e \div G \times E^* \geq 80 \text{ (Expression 3)}.$$

**4.** Pneumatique selon l'une quelconque des revendications 1 à 3, dans lequel la composition de caoutchouc contient 80 parties en masse ou plus et 100 parties en masse ou moins de caoutchouc à base d'isoprène (IR) dans 100 parties en masse de composant caoutchouc, et contient 5 parties en masse ou plus et 80 parties en masse ou moins de noir de carbone et 0,1 parties en masse ou plus et 5 parties en masse ou moins d'un sel de cobalt d'acide organique par 100 parties en masse de composant caoutchouc.

**5.** Pneumatique selon la revendication 4, dans lequel le noir de carbone est du noir de carbone ayant une aire de surface spécifique BET non supérieure à 45 $m^2/g$, telle que mesurée selon la norme ASTM D3037-93, et est contenu dans une quantité non inférieure à 5 parties en masse et non supérieure à 60 parties en masse par 100 parties en masse de composant caoutchouc.

**6.** Pneumatique selon la revendication 4 ou la revendication 5, dans lequel le sel de cobalt d'acide organique est un sel

de cobalt de l'acide acétyl acétonique, de l'acide fumarique, de l'acide pentanoïque, de l'acide acétique, de l'acide benzoïque ou un dérivé de ceux-ci.

7. Pneumatique selon l'une quelconque des revendications 4 à 6, dans lequel le sel de cobalt d'acide organique est un sel de cobalt d'un acide organique contenant du bore.

8. Pneumatique selon l'une quelconque des revendications 4 à 7, dans lequel la composition de caoutchouc contient une résine phénolique et/ou une résine de mélamine.

9. Pneumatique selon l'une quelconque des revendications 4 à 8, dans lequel la composition de caoutchouc contient 0,1 parties en masse ou plus et 5 parties en masse ou moins d'un dérivé aliphatique de sel de sodium (thiosulfate) par 100 parties en masse de composant caoutchouc.

10. Pneumatique selon l'une quelconque des revendications 1 à 9, dans lequel une couche adhésive est mise en place entre chaque câble de renforcement et la composition de caoutchouc.

11. Pneumatique selon la revendication 10, dans lequel la couche adhésive est formée de sorte à contenir un composé polybenzoxazine contenant une unité représentée par ce qui suit (Formule chimique 1) ou (Formule chimique 2),

[Formule chimique 1]

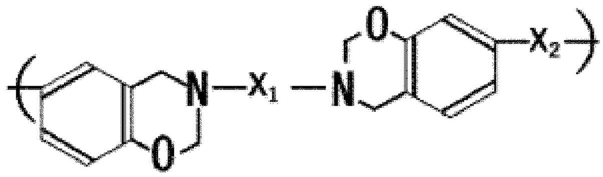

(Formule chimique 1)

[Formule chimique 2]

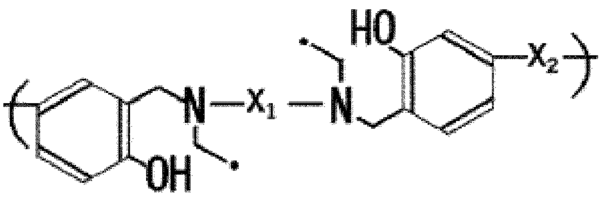

(Formule chimique 2)

où

$X_1$ est un hydrocarbure choisi parmi des hydrocarbures aliphatiques, alicycliques et aromatiques, ou une combinaison de ceux-ci, et a éventuellement une structure dans laquelle l'un quelconque des hétéroatomes parmi S, O, N et P, ou ces hétéroatomes, sont reliés de manière continue, et
$X_2$ a une structure (S)n dans laquelle n (1 à 8) atomes S sont reliés et a éventuellement un hydrocarbure choisi parmi les hydrocarbures aliphatiques, alicycliques et aromatiques, et l'un quelconque parmi S, O, N et P et/ou une combinaison de ceux-ci.

12. Pneumatique selon la revendication 10, dans lequel la couche adhésive est formée de sorte à contenir un composé polybenzoxazine contenant une unité représentée par ce qui suit (Formule chimique 3) ou (Formule chimique 4),

[Formule chimique 3]

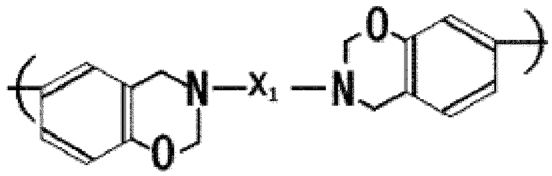

(Formule chimique 3)

[Formule chimique 4]

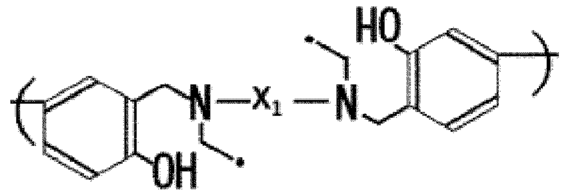

(Formule chimique 4)

(Formule chimique 4) où
$X_1$ est un hydrocarbure choisi parmi les hydrocarbures aliphatiques, alicycliques et aromatiques, ou une combinaison de ceux-ci et a une structure (S)n dans laquelle n (1 à 8) atomes S sont reliés.

**13.** Pneumatique selon l'une quelconque des revendications 1 à 12, dans lequel le nombre e (câbles/5 cm) de câbles de renforcement agencés et une aire de section transversale A ($mm^2$) de chaque câble de renforcement satisfont ce qui suit (Expression 4),

$$e \times A > 4,0 \qquad \text{(Expression 4)}.$$

**14.** Pneumatique selon l'une quelconque des revendications 1 à 13, dans lequel un angle formé par les câbles de renforcement et une ligne droite parallèle à la direction circonférentielle du pneu n'est pas inférieur à 10 ° et non supérieur à 35 °.

**15.** Pneumatique selon l'une quelconque des revendications 1 à 14, dans lequel un diamètre extérieur r (mm) de chaque câble de renforcement n'est pas inférieur à 0,1 mm et non supérieur à 0,5 mm.

**16.** Pneumatique selon l'une quelconque des revendications 1 à 15, dans lequel

au moins deux couches sont mises en place en tant que couche de ceinture, et
au moins une paire de couches de ceinture adjacentes l'une à l'autre dans la direction radiale du pneu sont agencées avec une distance non inférieure à 0,1 mm et non supérieure à 0,8 mm entre elles.

**17.** Pneumatique selon l'une quelconque des revendications 1 à 16, dans lequel, lorsqu'une largeur de section transversale et un diamètre extérieur du pneu lorsque le pneu est équipé d'une jante normale, et une pression interne du pneu est réglée à 250 kPa, sont désignés par Wt (mm) et Dt (mm), respectivement, ce qui suit (Expression 5) est satisfait,

$$1650 \leq (Dt^2 \times \pi/4)/Wt \qquad \text{(Expression 5)}.$$

**18.** Pneumatique selon l'une quelconque des revendications 1 à 17, dans lequel

la partie bande de roulement a une pluralité de nervures circonférentielles s'étendant en continu dans la direction circonférentielle du pneu, et

un total des aires en section transversale de la pluralité des nervures circonférentielles n'est pas inférieur à 10 % et non supérieur à 30 % d'une aire de section transversale de la partie bande de roulement.

**19.** Pneumatique selon l'une quelconque des revendications 1 à 18, dans lequel

la partie bande de roulement a une pluralité de nervures circonférentielles s'étendant en continu dans la direction circonférentielle du pneu, et
un ratio ($L_{80}/L_0$) d'une largeur de rainure $L_{80}$ à une profondeur qui est égale à 80 % d'une profondeur maximale de la nervure circonférentielle, sur une largeur de nervure $L_0$ de la nervure circonférentielle à une surface de contact avec le sol de la partie bande de roulement n'est pas inférieur à 0,3 et non supérieur à 0,7.

**20.** Pneumatique selon l'une quelconque des revendications 1 à 19, dans lequel

la partie bande de roulement possède en outre une pluralité de nervures latérales s'étendant dans une direction axiale du pneu, et
un total des volumes de la pluralité de nervures latérales n'est pas inférieur à 2,0 % et non supérieur à 5,0 % d'un volume de la partie bande de roulement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018178034 A
- JP 2019089911 A
- WO 2018186367 A
- JP 2019206643 A
- WO 2021085385 A1
- US 4414370 A
- JP S596207 A
- JP H558005 B
- JP H1313522 A
- US 5010166 A
- US 20200290402 A


### Non-patent literature cited in the description


- annual research report. TREND. Toagosei Co., Ltd., 2000, vol. 3, 42-45